# EUROPEAN PATENT APPLICATION

(11) **EP 4 391 459 A1**
(43) Date of publication of application: **26.06.2024**
(21) Application number: 22885353.7
(22) Date of filing: 19.08.2022
(51) Int. Cl.: H04L 12/28

(54) **SCENARIO SYNCHRONIZATION METHOD AND APPARATUS, AND ELECTRONIC DEVICE AND READABLE STORAGE MEDIUM**

(30) Priority: 31.10.2021 CN 202111291981
(71) Applicant: Huawei Technologies Co., Ltd., Shenzhen, Guangdong 518129 (CN)
(72) Inventor: YANG, Jiachen, Shenzhen, Guangdong 518129 (CN)
(74) Representative: Gill Jennings & Every LLP
(86) International application number: PCT/CN2022/113613
(87) International publication number: WO 2023/071454

(57) **Abstract**

This application is applicable to the terminal field, and provides a scenario synchronization method and apparatus, an electronic device, and a readable storage medium. The method includes: A second device controls a third device in a second place based on a setting parameter of a second scenario, to implement the second scenario in the second place. The setting parameter of the second scenario is generated based on a setting parameter of a first scenario. The second device controls a fourth device in the second place when a second environmental parameter is different from a first environmental parameter, so that the second environmental parameter is the same as or similar to the first environmental parameter. The second scenario is generated by using the setting parameter of the first scenario, and a scenario in a first place can be synchronized to the second place without a need of manually configuring the scenario. This can effectively improve scenario synchronization efficiency, reduce operation difficulty, and improve user experience of scenario synchronization. In addition, a user can have the same experience in the second scenario as that in the first scenario.

## Description

This application claims priority to Chinese Patent Application No. 202111291981.6, filed with the China National Intellectual Property Administration on October 31, 2021 and entitled "SCENARIO SYNCHRONIZATION METHOD AND APPARATUS, ELECTRONIC DEVICE, AND READABLE STORAGE MEDIUM", which is incorporated herein by reference in its entirety.

### TECHNICAL FIELD

This application relates to the terminal field, and in particular, to a scenario synchronization method and apparatus, an electronic device, and a readable storage medium.

### BACKGROUND

Because smart home devices can make a user's living environment more comfortable and convenient, smart home devices start to be widely used in more residential areas such as houses, hotels, and apartments. In a residential area, a plurality of intelligent devices may be combined and associated, to implement scenario-based control on a living environment. However, when the user changes a residence, for example, checks in a hotel on a business trip, if the user wants to realize, in the hotel, a scenario in the user's house, the user manually configures the scenario. Consequently, operations are complex, efficiency is low, and user experience is affected.

### SUMMARY

Embodiments of this application provide a scenario synchronization method and apparatus, an electronic device, and a readable storage medium, to resolve a problem of complex operations and low efficiency during scenario synchronization.

According to a first aspect, an embodiment of this application provides a scenario synchronization method. The method is applied to a second device and includes: The second device controls a third device in a second place based on a setting parameter of a second scenario, to implement the second scenario in the second place, where the second scenario is a scenario that is generated by the second device or a server based on a setting parameter of a first scenario in a first place and that has a same function as the first scenario, and the setting parameter of the second scenario is generated based on the setting parameter of the first scenario. The second device controls a fourth device in the second place when a second environmental parameter is different from a first environmental parameter, so that the second environmental parameter is the same as or similar to the first environmental parameter, where the first environmental parameter is an environmental parameter used when the first scenario is implemented in the first place, and the second environmental parameter is an environmental parameter used when the second scenario is implemented in the second place.

A first device may be a mobile phone, a tablet computer, a wearable device, a notebook computer, an ultra-mobile personal computer (ultra-mobile personal computer, UMPC), anetbook, a personal digital assistant (personal digital assistant, PDA), or the like.

The second device may be a gateway, a customized terminal including the gateway, a mobile phone, a tablet computer, a notebook computer, or the like. Types of the first device and the second device are not limited in embodiments of this application.

The third device may include a smart home device, for example, a smart television, a smart desk lamp, a smart top lamp, a smart speaker, a smart air purifier, a smart air conditioner, a smart humidifier, a smart refrigerator, a robotic vacuum cleaner, a smart curtain, a smart rice cooker, or the like. The third device may further include sensors, such as a temperature sensor, a humidity sensor, a door and window opening/closing sensor, a light sensor, and a movement sensor, that are configured to monitor an environmental parameter. The sensor may be disposed separately, or may be disposed in the third device. It should be noted that the fourth device may be a smart home device that is different from the third device but is capable of affecting the second environmental parameter.

It should be further noted that the second environmental parameter is similar to the first environmental parameter. In some embodiments, when the first environmental parameter and the second environmental parameter include one parameter, a difference between the second environmental parameter and the first environmental parameter may be less than a preset threshold. Alternatively, a ratio of the second environmental parameter to the first environmental parameter is close to 1.

In some embodiments, when the first environmental parameter and the second environmental parameter include a plurality of parameters collected within a time period, the first environmental parameter and the second environmental parameter may be represented in a form of a curve or an array. That the second environmental parameter is similar to the first environmental parameter may be that a similarity between a curve or an array used to represent the second environmental parameter and a curve or an array used to represent the first environmental parameter is close to 1, or may be that a distance between a curve used to represent the second environmental parameter and a curve used to represent the first environmental parameter is close to 0, an average value of the first environmental parameter is close to an average value of the second environmental parameter, or the like. This is not limited in this application. The average value may alternatively be a mode, a harmonic average value, an average value obtained after the maximum and minimum values are removed, an average value obtained after a plurality of larger and smaller values are removed, or the like.

In the first aspect, the second scenario in the second place is generated by using the second device or the server based on the setting parameter of the first scenario in the first place. The second scenario and the first scenario have a same function. Therefore, a scenario in the first place can be synchronized to the second place without a need of manually configuring the scenario. This can effectively improve scenario synchronization efficiency, reduce operation difficulty, and improve user experience of scenario synchronization.

In addition, when the second scenario is implemented in the second place, the second environmental parameter of the second scenario is further obtained. When the second environmental parameter is different from the first environmental parameter, the second device adjusts the second environmental parameter by using the fourth device in the second place, so that the second environmental parameter is the same as or similar to the first environmental parameter. After adjustment, the environmental parameter used when the second scenario is implemented in the second place is similar to the environmental parameter used when the first scenario is implemented in the first place, so that the second place can provide living experience close to that of the first place.

In some embodiments, the first environmental parameter or the second environmental parameter includes at least one of the following environmental parameters: a temperature, humidity, light intensity, a light color temperature, air quality, and sound intensity.

In some embodiments, the method further includes: The second device further controls at least one third device, so that the second environmental parameter is the same as or similar to the first environmental parameter.

In some embodiments, the step in which the second device generates the second scenario based on the setting parameter of the first scenario in the first place includes: The second device receives a first scenario configuration template, where the first scenario configuration template includes the setting parameter of the first scenario and the first environmental parameter of the first scenario, and the setting parameter of the first scenario includes an execution condition of the first scenario, the third device for implementing the first scenario, and a setting parameter of the third device. The second device creates the second scenario based on the first scenario configuration template.

The second scenario is created by using the first scenario configuration template, so that the first scenario can be more accurately synchronized to the second place, and scenario synchronization efficiency can be improved. In this way, when the synchronized second scenario is executed, the second place can provide living experience close to that of the first place.

In some embodiments, the setting parameter of the first scenario further includes a scenario type. That the second device creates the second scenario based on the first scenario configuration template includes:
setting an execution condition of the second scenario based on the execution condition of the first scenario and the scenario type, where the scenario type includes a trigger scenario, a timing scenario, or a manual scenario; and when the second place includes the third device for implementing the first scenario, setting a setting parameter of the third device in the second scenario based on the setting parameter of the third device in the first scenario.

In some embodiments, the setting an execution condition of the second scenario based on the execution condition of the first scenario and the scenario type includes: when the scenario type is the trigger scenario, obtaining a dependent device of the execution condition of the first scenario and a trigger parameter; and when the second place includes the dependent device of the execution condition of the first scenario, setting the execution condition of the second scenario based on the trigger parameter.

In some embodiments, the setting an execution condition of the second scenario based on the execution condition of the first scenario and the scenario type includes: when the scenario type is the timing scenario or the manual scenario, setting the execution condition of the first scenario as the execution condition of the second scenario.

In some embodiments, the setting a setting parameter of the third device in the second scenario based on the setting parameter of the third device in the first scenario includes: when a setting scale of the third device in the first scenario is different from a setting scale of the third device in the second scenario, mapping, based on the setting scale of the third device in the second scenario, the setting parameter of the third device in the first scenario to a corresponding setting parameter in the setting scale of the third device in the second scenario; and setting the setting parameter of the third device in the second scenario based on the setting parameter obtained through mapping.

In some embodiments, the method further includes: obtaining a location label and a capability label of the third device, and determining a device including the location label and the capability label of the third device as the fourth device.

The fourth device is determined by using the location label and the capability label of the third device, so that the determined fourth device is capable of affecting the second environmental parameter during running, and the second environmental parameter is the same as or similar to the first environmental parameter.

In some embodiments, the method further includes: determining, based on a location label and a capability label of the third device, a device that is located in a second region and that is capable of affecting the second environmental parameter as the fourth device, where the location label of the third device is used to indicate that the third device is located in a first region in the second place, the first region is connected to or adjacent to the second region, and the capability label of the third device is used to indicate that the third device is capable of affecting the second environmental parameter.

The device that is located in the second region and that is capable of affecting the second environmental parameter is determined as the fourth device, so that the fourth device is not limited to being located in a same region as the third device, an application scope of the scenario synchronization method is expanded, and user experience is better improved. In some embodiments, the method further includes: obtaining at least one second region based on preset location relationships between a plurality of regions in the second place and the first region, where the second region is connected to or adjacent to the first region.

The second region can be obtained more accurately by using the preset location relationships between the plurality of regions in the second place and the first region, so as to ensure that the fourth device in the second region is capable of affecting the second environmental parameter.

In some embodiments, the second region further includes an availability status, and the availability status includes available and unavailable. The determining the second region in the second place includes: when an isolation device is disposed between the first region and the at least one second region, obtaining an isolation status of each isolation device; and determining an availability status of each second region based on the isolation status of each isolation device.

In some embodiments, the determining an availability status of each second region based on an opening/closing status of each isolation device includes: when the isolation device between the second region and the first region does not isolate the first region from the second region, determining that an availability status of a second region that is not isolated is available; or when the isolation device between the second region and the first region isolates the first region from the second region, determining that an availability status of a second region that is not isolated is unavailable.

Whether the second region is available is determined by using the isolation status of the isolation device disposed between the first region and the second region, so that the second region can be obtained more accurately based on the foregoing embodiments, thereby providing better user experience.

In some embodiments, that the second device controls a fourth device in the second place when a second environmental parameter is different from a first environmental parameter, so that the second environmental parameter is the same as or similar to the first environmental parameter includes: when the second environmental parameter is different from the first environmental parameter, controlling a running status of the fourth device, so that a difference between the second environmental parameter and the first environmental parameter is less than or equal to a preset threshold.

In some embodiments, that the second device controls a fourth device in the second place when a second environmental parameter is different from a first environmental parameter, so that the second environmental parameter is the same as or similar to the first environmental parameter includes: when the second environmental parameter is different from the first environmental parameter, controlling a running status of the fourth device, so that a ratio of the second environmental parameter to the first environmental parameter approaches 1.

According to a second aspect, an embodiment of this application provides a scenario synchronization method. The method is applied to a first device and includes:

When a first scenario is implemented in a first place, the first device obtains a first environmental parameter of the first place and a setting parameter of the first scenario, and generates a first scenario configuration template based on the setting parameter of the first scenario.

The first device in the second aspect is similar to the first device in the first aspect. Details are not described herein again.

In some embodiments, the generating a first scenario configuration template based on the setting parameter of the first scenario includes:
determining a scenario type of the first scenario based on an execution condition of the first scenario, where the scenario type includes a trigger scenario, a timing scenario, or a manual scenario; obtaining a third device to be dependent upon during implementation of the first scenario and a setting parameter of the third device; and generating the first scenario configuration template based on the execution condition of the first scenario, the scenario type, the third device for implementing the first scenario, and the setting parameters of the third device.

In some embodiments, the determining a scenario type of the first scenario based on an execution condition of the first scenario includes: when the execution condition of the first scenario includes responding to a trigger instruction, determining that the first scenario is the trigger scenario, where the trigger instruction is sent when a trigger parameter collected by a dependent device that determines the execution condition of the first scenario meets a preset condition.

In some embodiments, the determining a scenario type of the first scenario based on an execution condition of the first scenario includes: when the execution condition of the first scenario is responding to a timing instruction, determining that the first scenario is the timing scenario, where the timing instruction is sent by the first device at a preset timing point.

In some embodiments, the determining a scenario type of the first scenario based on an execution condition of the first scenario includes: when the execution condition of the first scenario is responding to a manual instruction, determining that the first scenario is the manual scenario, where the manual instruction is sent by the first device according to an execution instruction after receiving the execution instruction from a user.

According to a third aspect, an embodiment of this application provides a scenario synchronization apparatus. The apparatus is used in a second device and includes:
a control module, configured to control a third device in a second place based on a setting parameter of a second scenario, to implement the second scenario in the second place, where the second scenario is a scenario that is generated by the second device or a server based on a setting parameter of a first scenario in a first place and that has a same function as the first scenario, and the setting parameter of the second scenario is generated based on the setting parameter of the first scenario; and
an adjustment module, configured to control a fourth device in the second place when a second environmental parameter is different from a first environmental parameter, so that the second environmental parameter is the same as or similar to the first environmental parameter, where the first environmental parameter is an environmental parameter used when the first scenario is implemented in the first place, and the second environmental parameter is an environmental parameter used when the second scenario is implemented in the second place.

In some embodiments, the first environmental parameter or the second environmental parameter includes at least one of the following environmental parameters: a temperature, humidity, light intensity, a light color temperature, air quality, and sound intensity.

In some embodiments, the adjustment module is further configured to control at least one third device, so that the second environmental parameter is the same as or similar to the first environmental parameter.

In some embodiments, the apparatus further includes a synchronization module, configured to: receive a first scenario configuration template, where the first scenario configuration template includes the setting parameter of the first scenario and the first environmental parameter of the first scenario, and the setting parameter of the first scenario includes an execution condition of the first scenario, the third device for implementing the first scenario, and a setting parameter of the third device; and create the second scenario based on the first scenario configuration template.

In some embodiments, the setting parameter of the first scenario further includes a scenario type. The synchronization module is specifically configured to: set the execution condition of the second scenario based on the execution condition of the first scenario and the scenario type, where the scenario type includes a trigger scenario, a timing scenario, or a manual scenario; and when the second place includes the third device for implementing the first scenario, set a setting parameter of the third device in the second scenario based on the setting parameter of the third device in the first scenario.

In some embodiments, the synchronization module is further configured to: when the scenario type is the trigger scenario, obtain a dependent device of the execution condition of the first scenario and a trigger parameter; and when the second place includes the dependent device of the execution condition of the first scenario, set the execution condition of the second scenario based on the trigger parameter.

In some embodiments, the synchronization module is further configured to: when the scenario type is the timing scenario or the manual scenario, set the execution condition of the first scenario as the execution condition of the second scenario.

In some embodiments, the synchronization module is specifically configured to: when a setting scale of the third device in the first scenario is different from a setting scale of the third device in the second scenario, map, based on the setting scale of the third device in the second scenario, the setting parameter of the third device in the first scenario to a corresponding setting parameter in the setting scale of the third device in the second scenario; and set the setting parameter of the third device in the second scenario based on the setting parameter obtained through mapping.

In some embodiments, the synchronization module is further configured to: obtain a location label and a capability label of the third device, and determine a device including the location label and the capability label of the third device as the fourth device.

In some embodiments, the synchronization module is further configured to determine, based on a location label and a capability label of the third device, a device that is located in a second region and that is capable of affecting the second environmental parameter as the fourth device, where the location label of the third device is used to indicate that the third device is located in a first region in the second place, the first region is connected to or adj acent to the second region, and the capability label of the third device is used to indicate that the third device is capable of affecting the second environmental parameter.

In some embodiments, the synchronization module is further configured to obtain at least one second region based on preset location relationships between a plurality of regions in the second place and the first region, where the second region is connected to or adjacent to the first region.

In some embodiments, the second region further includes an availability status, and the availability status includes available and unavailable. The synchronization module is specifically configured to: when an isolation device is disposed between the first region and the at least one second region, obtain an isolation status of each isolation device; and determine an availability status of each second region based on the isolation status of each isolation device.

In some embodiments, the synchronization module is specifically configured to: when the isolation device between the second region and the first region does not isolate the first region from the second region, determine that an availability status of a second region that is not isolated is available; or when the isolation device between the second region and the first region isolates the first region from the second region, determine that an availability status of a second region that is not isolated is unavailable.

In some embodiments, the adjustment module is specifically configured to: when the second environmental parameter is different from the first environmental parameter, control a running status of the fourth device, so that a difference between the second environmental parameter and the first environmental parameter is less than or equal to a preset threshold.

In some embodiments, the adjustment module is specifically configured to: when the second environmental parameter is different from the first environmental parameter, control a running status of the fourth device, so that a ratio of the second environmental parameter to the first environmental parameter approaches 1.

According to a fourth aspect, an embodiment of this application provides a scenario synchronization apparatus. The apparatus is used in a first device and includes: an obtaining module, configured to: when a first scenario is implemented in a first place, obtain a first environmental parameter of the first place and a setting parameter of the first scenario; and a generation module, configured to generate a first scenario configuration template based on the setting parameter of the first scenario.

In some embodiments, the generation module is specifically configured to: determine a scenario type of the first scenario based on an execution condition of the first scenario, where the scenario type includes a trigger scenario, a timing scenario, or a manual scenario; obtain a third device to be dependent upon during implementation of the first scenario and a setting parameter of the third device; and generate the first scenario configuration template based on the execution condition of the first scenario, the scenario type, the third device for implementing the first scenario, and the setting parameters of the third device.

In some embodiments, the generation module is further configured to: when the execution condition of the first scenario includes responding to a trigger instruction, determine that the first scenario is the trigger scenario, where the trigger instruction is sent when a trigger parameter collected by a dependent device that determines the execution condition of the first scenario meets a preset condition.

In some embodiments, the generation module is further configured to: when the execution condition of the first scenario is responding to a timing instruction, determine that the first scenario is the timing scenario, where the timing instruction is sent by the first device at a preset timing point.

In some embodiments, the generation module is further configured to: when the execution condition of the first scenario is responding to a manual instruction, determine that the first scenario is the manual scenario, where the manual instruction is sent by the first device according to an execution instruction after receiving the execution instruction from a user.

According to a fifth aspect, an embodiment of this application provides an electronic device, including a memory, a processor, and a computer program that is stored in the memory and that can be run on the processor. When executing the computer program, the processor implements the method provided in the first aspect or the second aspect.

According to a sixth aspect, an embodiment of this application provides a computer-readable storage medium. The computer-readable storage medium stores a computer program, and when the computer program is executed by a processor, the method provided in the first aspect or the second aspect is implemented.

According to a seventh aspect, an embodiment of this application provides a computer program product. When the computer program product runs on an electronic device, the electronic device is enabled to implement the method provided in the first aspect or the second aspect.

According to an eighth aspect, an embodiment of this application provides a chip system. The chip system includes a memory and a processor, and the processor executes a computer program stored in the memory, to implement the method provided in the first aspect or the second aspect.

According to a ninth aspect, an embodiment of this application provides a chip system. The chip system includes a processor, the processor is coupled to the computer-readable storage medium provided in the fourth aspect, and the processor executes the computer program stored in the computer-readable storage medium, to implement the method provided in the first aspect or the second aspect.

It may be understood that, for beneficial effects of the second aspect to the ninth aspect, refer to the related descriptions in the first aspect. Details are not described herein again.

### BRIEF DESCRIPTION OF DRAWINGS

FIG. 1 is a schematic diagram of an application scenario of a scenario synchronization method;
FIG. 2 is a schematic diagram of a structure of an electronic device to which a scenario synchronization method is applied;
FIG. 3A to FIG. 3C are a schematic diagram of a software structure of an electronic device to which a scenario synchronization method is applied;
FIG. 4 is a schematic flowchart of a scenario synchronization method according to this application;
FIG. 5 is a block diagram of a structure of a scenario synchronization apparatus used in a second device according to an embodiment of this application;
FIG. 6 is a block diagram of a structure of a scenario synchronization apparatus used in a first device according to an embodiment of this application; and
FIG. 7 is a block diagram of a structure of an electronic device according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if" may be interpreted as "when" or "once" or "in response to determining" or "in response to detecting".

In addition, in the descriptions of the specification and claims of this application, the terms "first", "second", "third", and the like are merely intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in one embodiment", "in some embodiments", "in some other embodiments", and "in still some other embodiments" that appear at different places in this specification do not necessarily refer to a same embodiment, but mean "one or more but not all embodiments", unless otherwise specially emphasized in another manner.

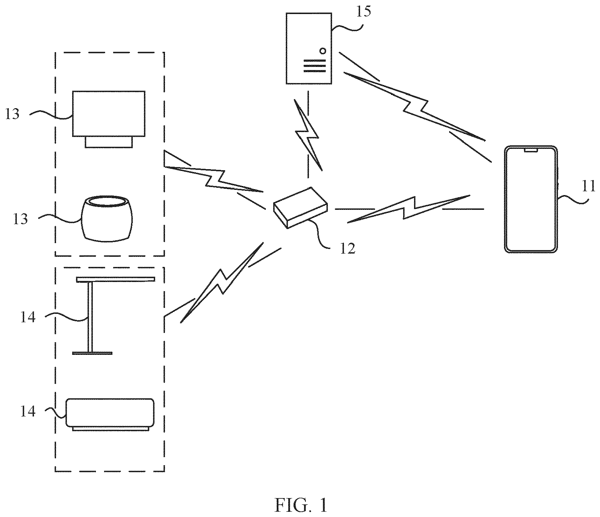

FIG. 1 is a schematic diagram of an application scenario of a scenario synchronization method.

Refer to FIG. 1. An electronic device 11 (a first device), a gateway 12 (a second device), one or more smart home devices 13 (third devices), one or more smart home devices 14 (fourth devices), and a server 15 may be included.

In some embodiments, the third device is a device that is set to implement a scenario function during scenario synchronization, and the fourth device is a device that is capable of affecting an environmental parameter in a scenario during implementation of the scenario function. The third device and the fourth device may include devices of a same type, for example, both include a lamp and an air conditioner. The third device and the fourth device may alternatively include devices of different types, for example, the third device includes a lamp, and the fourth device includes a smart curtain. Specific functions and effects of the third device and the fourth device are more clearly reflected in descriptions of subsequent embodiments. Details are not described herein.

In some embodiments, the gateway 12 (the second device) is configured to connect the smart home device 13 and the smart home device 14 to the server 15 through a network. It should be understood that, in addition to the gateway 12, the second device may be any device having a gateway function, for example, a control panel integrating a gateway function, a home central control platform, a hub device, a smart speaker, a router, or the like. In FIG. 1, the second device is presented in a form of the gateway 12. However, this application is not limited thereto.

The electronic device 11 and the gateway 12 may transmit data through near-distance communication. The gateway 12 and each smart home device 13 may also transmit data through near-distance communication. The electronic device 11 and the gateway 12 may communicate with the server 15 through a network.

The near-distance communication may include Bluetooth (Bluetooth), near field communication (Near Field Communication, NFC), a wireless network (Wi-Fi), ZigBee (ZigBee), long range radio (long range radio, LoRa), narrow band internet of things (narrow band internet of things, NB-IoT), power line communication (power line communication, PLC), and the like. The network may be a wired network or a wireless network. The wired network includes a local area network (local area network, LAN), a wide area network (wide area network, WAN), and the like. The wireless network may be a wireless local area network (wireless local area network, WLAN) and a wireless network provided by wireless communication such as 2G/3G/4G/5G, for example, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR), and the like. This is not limited in embodiments of this application.

The electronic device 11 may include a mobile phone, a tablet computer, a wearable device, a notebook computer, an ultra-mobile personal computer (ultra-mobile personal computer, UMPC), a netbook, a personal digital assistant (personal digital assistant, PDA), and the like. The smart home device 13 and the smart home device 14 may include a smart television, a smart desk lamp, a smart top lamp, a smart speaker, a smart air purifier, a smart air conditioner, a smart humidifier, a smart refrigerator, a robotic vacuum cleaner, a smart curtain, a smart rice cooker, and the like. The smart home device 13 and the smart home device 14 may further include sensors, such as a temperature sensor, a humidity sensor, a door and window opening/closing sensor, a light sensor, and a movement sensor, that are configured to monitor an environmental parameter. The sensor may be disposed separately, or may be disposed in the smart device.

It should be understood that, in some embodiments, the electronic device 11 and the smart home device 13 and the smart home device 14 may have an intersection, and may be in a mutual inclusion relationship. For example, if a user wants to set an alarm clock, the user may set the alarm clock by using a smart watch, a smart speaker, or a smart television that is used as the smart home device 13 or the smart home device 14, or the user may set the alarm clock by using a mobile phone that is used as the electronic device 11. In this case, the mobile phone of the user may also be understood as the smart home device 13 or the smart home device 14. In other words, whether a device is the electronic device 11, the smart home device 13, or the smart home device 14 in a scenario should be distinguished from a perspective of a function. A device may be both the electronic device 11 and the smart home device 13 or the smart home device 14, or may be the electronic device 11 in a scenario, and may be the smart home device 13 or the smart home device 14 in another scenario.

In the scenario shown in the embodiment in FIG. 1, in some embodiments, each smart home device 13 and each smart home device 14 are bound to the gateway 12. The gateway 12 may receive information that is for controlling and managing the smart home device 13 and the smart home device 14 and that is forwarded by the server 15, and forward the information to the corresponding smart home device 13 and the corresponding smart home device 14. The gateway 12 may further obtain or receive data like status information and control and management feedback information of each smart home device 13 and each smart home device 14, and forward the data to the electronic device 11 by using the server 15.

In some embodiments, each smart home device 13 and each smart home device 14 may alternatively directly receive, from the electronic device 11, information for controlling and managing the smart home device 13 and the smart home device 14, and directly send data like status information and control and management feedback information of each smart home device 13 and the smart home device 14 to the electronic device 11.

In some embodiments, each smart home device 13 and each smart home device 14 may alternatively receive, through forwarding by the gateway 12, information that is for controlling and managing the smart home device 13 and the smart home device 14 and that is sent by the electronic device 11, and send data like status information and control and management feedback information of each smart home device 13 and the smart home device 14 to the electronic device 11 through forwarding by the gateway 12.

The electronic device 11 may be a device belonging to the user by using a mobile phone as an example. A smart home-related control application is installed on the mobile phone of the user. After the user logs in to an account of the user in the application, the application may communicate with the server 15 based on the account of the user. For example, in response to a control instruction of the user, the electronic device 11 sends the information for controlling the smart home device 13 and the smart home device 14 to the gateway 12 by using the server 15. Alternatively, the electronic device 11 receives the data like status information and control and management feedback information of the smart home device 13 and the smart home device 14 forwarded by the server 15. Certainly, as described above, the electronic device 11 may alternatively directly communicate with the smart home device 13 and the smart home device 14, or communicate with the smart home device 13 and the smart home device 14 through forwarding by the gateway 12.

It is assumed that the user installs one or more, one or more types of smart home devices in a permanent residence (which may be referred to as a "first place", for example, a house of the user) of the user, and the user has configured a scenario (which may be referred to as a "first scenario", for example, a wake-up scenario) in the first place based on the smart home device installed in the first place.

When the user carries the mobile phone and enters an unfamiliar residence (which may be referred to as a "second place", for example, a hotel), if a smart home device is also installed in the unfamiliar residence, the user may open a smart home application in the mobile phone of the user, so that the mobile phone performs short-distance communication with the gateway 12 in the second place, to construct a secure communication channel. Then, the user may configure, in the second place in a manual configuration manner, the first scenario that is configured in the first place, to implement scenario synchronization.

For example, the first scenario is a wake-up scenario. In the wake-up scenario, when a specified time arrives, a lamp is turned on, and a speaker starts to play music. In this case, the user may manually configure the lamp (if any) in the second place and the speaker (if any) in the second place, so that the lamp is also turned on at the specified time, and the speaker starts to play music at the specified time. Therefore, the first scenario previously implemented in the first place is synchronized to the second place for implementation.

However, manual configuration of the synchronization scenario is complex, and synchronization efficiency is low. The user needs to manually set functions of all smart home devices sequentially.

In view of this, an embodiment of this application provides a scenario synchronization method. A second scenario in the second place may be generated by using the second device or the server based on a setting parameter of the first scenario in the first place. The second scenario and the first scenario have a same function. Therefore, a scenario in the first place can be synchronized to the second place without a need of manually configuring the scenario. This can effectively improve scenario synchronization efficiency, reduce operation difficulty, and improve user experience of scenario synchronization.

In some embodiments, the mobile phone may bind the mobile phone to the gateway 12 based on a user account in response to a user operation, so that the mobile phone can control each smart home device 13 and each smart home device 14 in the scenario and view device statuses of each smart home device 13 and each smart home device 14 by using the gateway 12. After the mobile phone is bound to the gateway 12, a scenario in a permanent residence like a house or a dormitory may be synchronized to an unfamiliar residence.

However, after the same scenario is synchronized, because a layout, a model, and performance of the smart home device 13 are different, the user may not be able to have the same experience as the permanent residence (the first place). For example, an area, an outdoor temperature, a light condition, and the like of the first place may be different from those of the second place, and power of an air conditioner, a type (a wall-mounted type, a cabinet type, or the like) of the air conditioner, and an installation direction of the air conditioner in the first place may also be different from those of the second place. The foregoing difference may cause a case in which in the first place and the second place, even if operating parameters of the air conditioner are set to the same parameters, body sensing temperatures of the user are different.

In view of this, an embodiment of this application further provides a scenario synchronization method. When the second scenario is implemented in the second place, the second environmental parameter of the second scenario is obtained. When the second environmental parameter is different from the first environmental parameter, the second device adjusts the second environmental parameter by using the fourth device in the second place, so that the second environmental parameter is the same as or similar to the first environmental parameter. After adjustment, the environmental parameter used when the second scenario is implemented in the second place is similar to the environmental parameter used when the first scenario is implemented in the first place, so that the second place can provide living experience close to that of the first place. The first environmental parameter is an environmental parameter used when the first scenario is implemented in the first place, and may be obtained by using a sensor disposed in the third device in the first scenario, or may be obtained by using a sensor independently disposed in the first scenario. The second environmental parameter is an environmental parameter used when the second scenario is implemented in the second place, and may be obtained by using a sensor disposed in the third device in the second scenario, or may be obtained by using a sensor independently disposed in the second scenario.

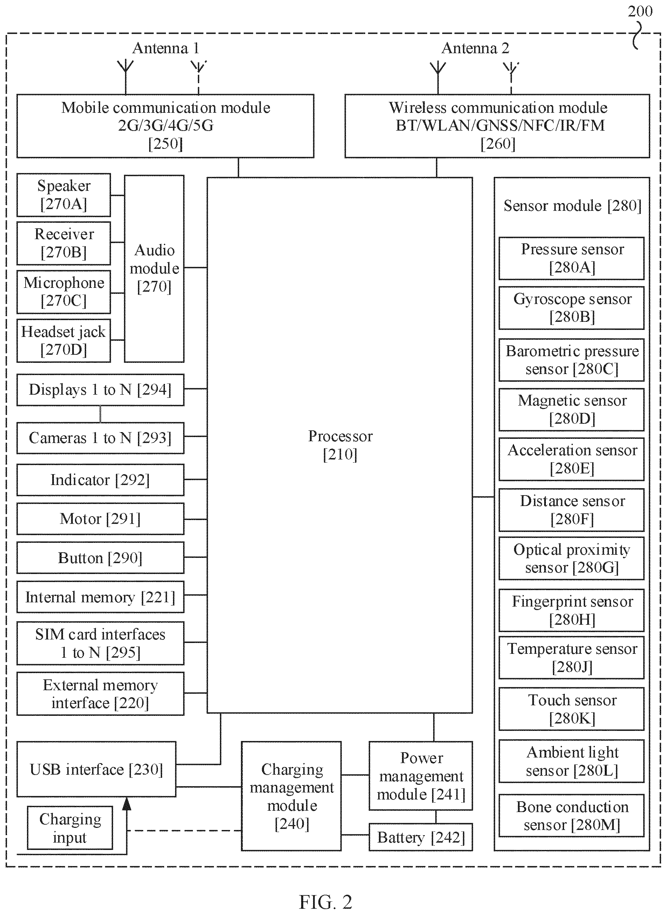

For example, FIG. 2 is a schematic diagram of a structure of an electronic device to which a scenario synchronization method is applied. In FIG. 2, an electronic device 200 may be the first device, the second device, the third device, or the fourth device. The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

For example, when the electronic device 200 is a mobile phone, a tablet computer, or a smart television, the electronic device 200 may include all the components in the figure or may include only some of the components in the figure.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 200. The controller may generate an operation control signal based on instruction operation code and a time sequence signal, to complete control of instruction fetching and instruction execution.

A memory may be further disposed in the processor 210, and is configured to store instructions and data. In some embodiments, the memory in the processor 210 is a cache memory. The memory may store instructions or data just used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 210 may include a plurality of groups of I2C buses. The processor 210 may be separately coupled to the touch sensor 280K, a charger, a flash, the camera 293, and the like by using different I2C bus interfaces. For example, the processor 210 may be coupled to the touch sensor 280K by using the I2C interface, so that the processor 210 communicates with the touch sensor 280K by using the I2C bus interface, to implement a touch function of the electronic device 200.

The I2S interface may be configured to perform audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transmit an audio signal to the wireless communication module 260 through the I2S interface.

The PCM interface may also be used to perform audio communication, and sample, quantize, and code an analog signal. In some embodiments, the audio module 270 may be coupled to the wireless communication module 260 through a PCM bus interface.

In some embodiments, the audio module 270 may alternatively transmit an audio signal to the wireless communication module 260 through the PCM interface. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication.

In some embodiments, the UART interface is usually configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music through a Bluetooth headset.

The MIPI interface may be configured to connect the processor 210 and a peripheral component such as the display 294 or the camera 293. The MIPI interface includes a camera serial interface (camera serial interface, CSI), a display serial interface (display serial interface, DSI), and the like. In some embodiments, the processor 210 communicates with the camera 293 by using the CSI interface, to implement a photographing function of the electronic device 200. The processor 210 communicates with the display 294 by using the DSI interface, to implement a display function of the electronic device 200.

The GPIO interface may be configured by using software. The GPIO interface may be configured as a control signal or a data signal. In some embodiments, the GPIO interface may be configured to connect the processor 210 to the camera 293, the display 294, the wireless communication module 260, the audio module 270, the sensor module 280, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to connect to a charger to charge the electronic device 200, or may be configured to transmit data between the electronic device 200 and a peripheral device, or may be configured to connect to a headset for playing an audio through the headset. The interface may be further configured to connect to another electronic device, for example, an AR device.

It may be understood that, an interface connection relationship between the modules shown in this embodiment of this application is merely an example for description, and does not constitute a limitation on the structure of the electronic device 200. In some other embodiments of this application, the electronic device 200 may alternatively use an interface connection mode different from an interface connection mode in this embodiment, or a combination of a plurality of interface connection modes.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input through a wireless charging coil of the electronic device 200. When charging the battery 242, the charging management module 240 may further supply power to the electronic device by using the power management module 241.

The power management module 241 is configured to connect to the battery 242, the charging management module 240, and the processor 210. The power management module 241 receives an input of the battery 242 and/or the charging management module 240, to supply power to the processor 210, the internal memory 221, an external memory, the display 294, the camera 293, the wireless communication module 260, and the like. The power management module 241 may be further configured to monitor parameters such as a battery capacity, a battery cycle count, and a battery health status (an electric leakage or impedance).

In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 250 may provide a wireless communication solution that includes 2G/3G/4G/5G or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1.

In some embodiments, at least some function modules in the mobile communication module 250 may be disposed in the processor 210. In some embodiments, at least some function modules in the mobile communication module 250 may be disposed in a same component as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 270A, the receiver 270B, or the like), or displays an image or a video through the display 294. In some embodiments, the modem processor may be an independent component. In some other embodiments, the modem processor may be independent of the processor 210, and is disposed in a same component as the mobile communication module 250 or another function module.

The wireless communication module 260 may provide a wireless communication solution that is applied to the electronic device 200, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 260 may be one or more components integrating at least one communication processor module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the electronic device 200, the antenna 1 and the mobile communication module 250 are coupled, and the antenna 2 and the wireless communication module 260 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 may implement a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, and the like, for example, a teaching video and a user action picture video in embodiments of this application. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 200 may include one or N displays 294, where N is a positive integer greater than 1.

The electronic device 200 may implement a photographing function by using the camera 293, the ISP, the video codec, the GPU, the display 294, the application processor and the like.

The ISP is configured to process data fed back by the camera 293. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of an image shooting scenario. In some embodiments, the ISP may be disposed in the camera 293.

The camera 293 is configured to capture a static image or a video. An optical image of an object is generated through the lens, and is projected onto the photosensitive element. A focal length of the lens may be used to indicate a framing range of the camera. A smaller focal length of the lens indicates a larger framing range of the lens. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

In this embodiment of this application, the electronic device 200 may include the camera 293 with two or more focal lengths.

The digital signal processor is configured to process a digital signal, and may process another digital signal in addition to the digital image signal. For example, when the electronic device 200 selects a frequency, the digital signal processor is configured to perform Fourier transform on frequency energy and the like.

The video codec is configured to compress or decompress a digital video. The electronic device 200 may support one or more video codecs. In this way, the electronic device 200 can play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. With reference to a structure of a biological neural network, for example, with reference to a transfer mode between neurons of a human brain, the NPU quickly processes input information, and can further continuously perform self-learning. The NPU can implement applications such as intelligent cognition of the electronic device 200, such as image recognition, facial recognition, speech recognition, and text understanding.

In this embodiment of this application, the NPU or another processor may be configured to perform an operation such as analysis processing on an image in a video stored in the electronic device 200.

The external memory interface 220 may be used to connect to an external storage card, for example, a micro SD card, to extend a storage capability of the electronic device 200. The external storage card communicates with the processor 210 through the external memory interface 220, to implement a data storage function. For example, files such as music and videos are stored in the external storage card.

The internal memory 221 may be configured to store computer executable program code, where the executable program code includes instructions. The processor 210 runs the instructions stored in the internal memory 221, to perform various function applications of the electronic device 200 and data processing. The internal memory 221 may include a program storage area and a data storage area. The program storage area may store an operating system, an application required by at least one function (for example, a voice playing function or an image playing function), and the like. The data storage area may store data (for example, audio data or an address book) created during use of the electronic device 200.

In addition, the internal memory 221 may include a high-speed random access memory, or may include a nonvolatile memory such as at least one disk storage device, a flash memory, or a universal flash storage (universal flash storage, UFS).

The electronic device 200 may implement an audio function by using the audio module 270, the speaker 270A, the receiver 270B, the microphone 270C, the headset jack 270D, the application processor, and the like.

The audio module 270 is configured to convert a digital audio signal into an analog audio signal for output, and is also configured to convert an analog audio input into a digital audio signal. The audio module 270 may further be configured to: code and decode the audio signal. In some embodiments, the audio module 270 may be disposed in the processor 210, or some function modules in the audio module 270 are disposed in the processor 210.

The speaker 270A, also referred to as a "horn", is configured to convert an audio electrical signal into a sound signal. The electronic device 200 may be used for listening to music or answering a hands-free call by using the speaker 270A. For example, the speaker may play a comparison analysis result provided in this embodiment of this application.

The receiver 270B, also referred to as an "earpiece", is configured to convert the audio electrical signal into the sound signal. When a call is answered or voice information is received by using the electronic device 200, the receiver 270B may be put close to a human ear to listen to a voice.

The microphone 270C, also referred to as a "mike" or a "mic", is configured to convert a sound signal into an electrical signal. When making a call or sending voice information, a user may make a sound near the microphone 270C through the mouth of the user, to input the sound signal to the microphone 270C. At least one microphone 270C may be disposed in the electronic device 200. In some other embodiments, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The headset jack 270D is configured to connect to a wired headset. The headset jack 270D may be the USB interface 230, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display 294. There are many types of pressure sensors 280A, such as a resistive pressure sensor, an inductive pressure sensor, and a capacitive pressure sensor. The capacitive pressure sensor may include at least two parallel plates made of conductive materials. When a force is applied to the pressure sensor 280A, capacitance between electrodes changes. The electronic device 200 determines pressure intensity based on the change in the capacitance. When a touch operation is performed on the display 294, the electronic device 200 detects intensity of the touch operation based on the pressure sensor 280A. The electronic device 200 may also calculate a touch location based on a detection signal of the pressure sensor 280A.

In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing a message is performed. When a touch operation whose touch operation intensity is greater than or equal to the first pressure threshold is performed on the SMS message application icon, an instruction for creating a new SMS message is performed.

The gyroscope sensor 280B may be configured to determine a moving posture of the electronic device 200. In some embodiments, an angular velocity of the electronic device 200 around three axes (namely, x, y, and z axes) may be determined by using the gyroscope sensor 280B. The gyroscope sensor 280B may be configured to implement image stabilization during image shooting. For example, when the shutter is pressed, the gyroscope sensor 280B detects an angle at which the electronic device 200 jitters, obtains, through calculation based on the angle, a distance for which a lens module needs to compensate, and allows the lens to cancel the jitter of the electronic device 200 through reverse motion, to implement image stabilization. The gyroscope sensor 280B may also be used in a navigation scenario and a somatic game scenario.

The barometric pressure sensor 280C is configured to measure atmospheric pressure. In some embodiments, the electronic device 200 calculates an altitude by using a value of the atmospheric pressure measured by the barometric pressure sensor 280C, to assist positioning and navigation.

The magnetic sensor 280D includes a Hall effect sensor. The electronic device 200 may detect opening and closing of a flip leather case by using the magnetic sensor 280D. In some embodiments, when the electronic device 200 is a clamshell phone, the electronic device 200 may detect opening and closing of a flip cover based on the magnetic sensor 280D. Further, a feature such as automatic unlocking of the flip cover is set based on a detected opening or closing state of the leather case or a detected opening or closing state of the flip cover.

The acceleration sensor 280E may detect magnitude of accelerations in various directions (usually on three axes) of the electronic device 200, and When the electronic device 200 is still, the acceleration sensor 280E may detect a magnitude and a direction of gravity. The acceleration sensor 280E may be further configured to identify a posture of the electronic device, and is used in an application such as switching between a landscape mode and a portrait mode or a pedometer.

The distance sensor 280F is configured to measure a distance. The electronic device 200 may measure a distance in an infrared manner or a laser manner. In some embodiments, in a shooting scenario, the electronic device 200 may perform ranging by using the distance sensor 280F to implement fast focusing.

The optical proximity sensor 280G may include, for example, a light-emitting diode (LED) and an optical detector, for example, a photodiode. The light emitting diode may be an infrared light emitting diode. The electronic device 200 emits infrared light by using the light emitting diode. The electronic device 200 detects infrared reflected light from a nearby object by using the photodiode. When detecting sufficient reflected light, the electronic device 200 may determine that there is an object near the electronic device 200. When detecting insufficient reflected light, the electronic device 200 may determine that there is no object near the electronic device 200. The electronic device 200 may detect, by using the optical proximity sensor 280G, that a user holds the electronic device 200 close to an ear to make a call, to automatically turn off a screen for power saving. The optical proximity sensor 280G may also be used for automatic screen unlocking and locking in a smart cover mode or a pocket mode.

The ambient light sensor 280L is configured to sense ambient light brightness. The electronic device 200 may adaptively adjust brightness of the display 294 based on the sensed ambient light brightness. The ambient light sensor 280L may also be configured to automatically adjust white balance during photographing. The ambient light sensor 280L may also cooperate with the optical proximity sensor 280G to detect whether the electronic device 200 is in a pocket to prevent an accidental touch.

The fingerprint sensor 280H is configured to collect a fingerprint. The electronic device 200 may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the electronic device 200 executes a temperature processing policy by using the temperature detected by the temperature sensor 280J. For example, when the temperature reported by the temperature sensor 280J exceeds a threshold, the electronic device 200 lowers performance of a processor located near the temperature sensor 280J, to reduce power consumption and implement thermal protection. In some other embodiments, when the temperature is less than another threshold, the electronic device 200 heats the battery 242, to avoid a case in which the electronic device 200 is shut down abnormally due to a low temperature. In some other embodiments, when the temperature is less than still another threshold, the electronic device 200 boosts an output voltage of the battery 242, to avoid an abnormal shutdown caused by a low temperature.

The touch sensor 280K is also referred to as a "touch panel". The touch sensor 280K may be disposed on the display 294, and the touch sensor 280K and the display 294 constitute a touchscreen, which is also referred to as a "touch screen". The touch sensor 280K is configured to detect a touch operation performed on or near the touch sensor 280K. The touch sensor may transfer the detected touch operation to the application processor to determine a type of the touch event. Visual output related to the touch operation may be provided through the display 294. In some other embodiments, the touch sensor 280K may also be disposed on a surface of the electronic device 200 at a location different from that of the display 294.

The bone conduction sensor 280M may obtain a vibration signal. In some embodiments, the bone conduction sensor 280M may obtain a vibration signal of a vibration bone of a human vocal-cord part. The bone conduction sensor 280M may also contact a pulse of a human body and receive a blood pressure pulse signal.

In some embodiments, the bone conduction sensor 280M may also be disposed in the headset, to combine into a bone conduction headset. The audio module 270 may parse out a voice signal based on the vibration signal of the vibration bone of the vocal part that is obtained by the bone conduction sensor 280M, to implement a voice function. The application processor may parse heart rate information based on the blood pressure pulse signal obtained by the bone conduction sensor 280M, to implement a heart rate detection function.

The button 290 includes a power button, a volume button, and the like. The button 290 may be a mechanical button, or may be a touch button. The electronic device 200 may receive a button input, and generate a button signal input related to a user setting and function control of the electronic device 200.

The motor 291 may generate a vibration prompt. The motor 291 may be configured to provide an incoming call vibration prompt and a touch vibration feedback. For example, touch operations performed on different applications (for example, photographing and audio playing) may correspond to different vibration feedback effects. For touch operations performed on different areas of the display 294, the motor 291 may also correspond to different vibration feedback effects. Different application scenarios (for example, a time reminder, information receiving, an alarm clock, and a game) may also correspond to different vibration feedback effects. A touch vibration feedback effect may be further customized.

The indicator 292 may be an indicator light, and may be configured to indicate a charging status and a power change, or may be configured to indicate a message, a missed call, a notification, and the like.

The SIM card interface 295 is configured to connect to a SIM card. The SIM card may be inserted into the SIM card interface 295 or removed from the SIM card interface 295, to implement contact with or separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or of different types. The SIM card interface 295 may also be compatible with different types of SIM cards. The SIM card interface 295 may also be compatible with the external storage card. The electronic device 200 interacts with a network by using the SIM card, to implement a call function, a data communication function, and the like. In some embodiments, the electronic device 200 uses an eSIM, that is, an embedded SIM card. The eSIM card may be embedded into the electronic device 200, and cannot be separated from the electronic device 200.

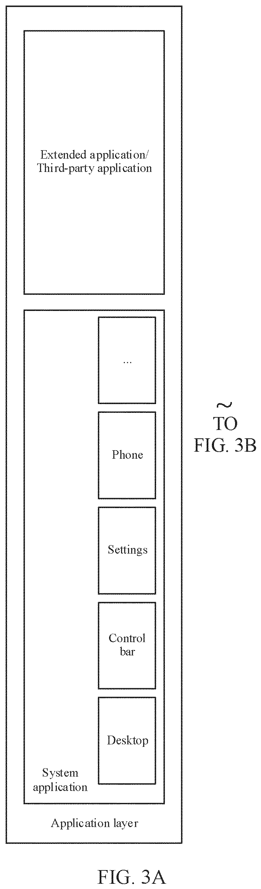

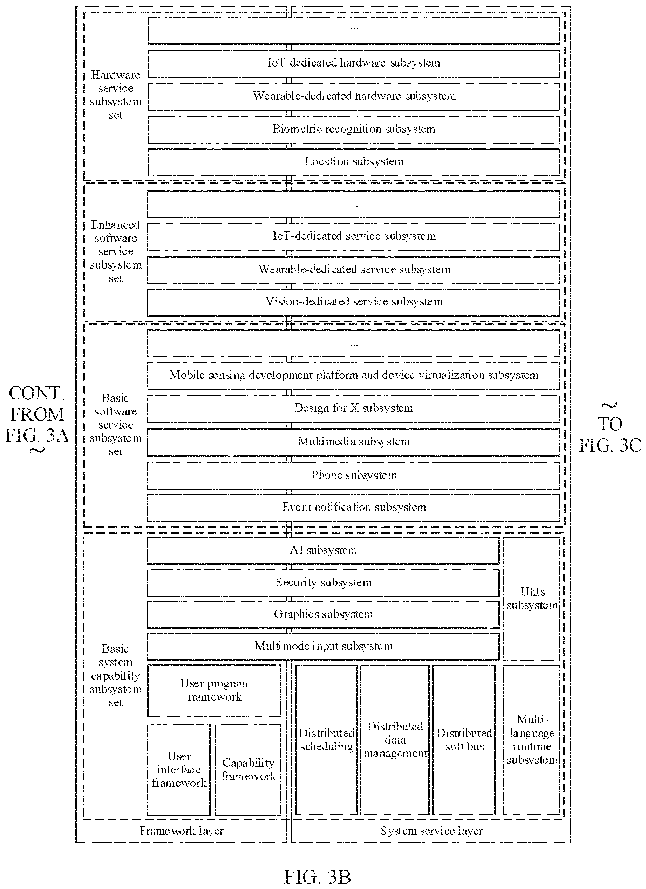

FIG. 3A to FIG. 3C are a schematic diagram of a software structure of an electronic device to which a scenario synchronization method is applied.

For example, an operating system in an electronic device 100 may be an Android (Android) system, a Linux (Linux) system, a Windows (Windows) system, an iPhone mobile operating system (iOS), a HarmonyOS (HarmonyOS), or the like. The method provided in this embodiment of this application is particularly applicable to the Linux system or another system derived from the Linux system. Herein, an example in which the operating system of the electronic device 100 is the HarmonyOS is used for description.

In some embodiments, the HarmonyOS may be divided into four layers, including a kernel layer, a system service layer, a framework layer, and an application layer. The layers communicate with each other through a software interface.

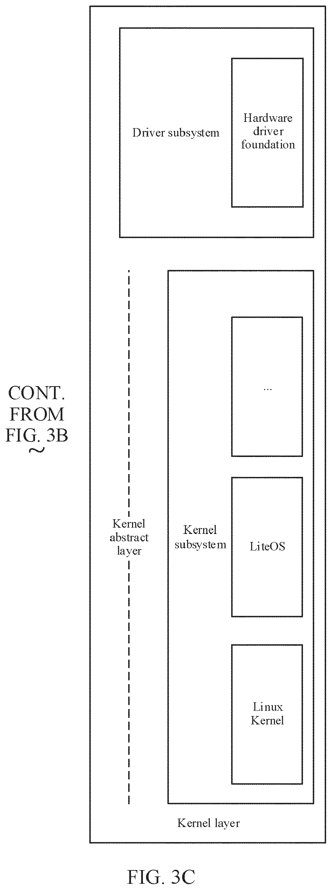

As shown in FIG. 3C, the kernel layer includes a kernel abstract layer (Kernel Abstract Layer, KAL) and a driver subsystem. The KAL includes a plurality of kernels, for example, a Linux kernel of a Linux system and a lightweight IoT system kernel LiteOS. The driver subsystem may include a hardware driver foundation (Hardware Driver Foundation, HDF). The hardware driver foundation can provide a unified peripheral access capability and a driver development and management framework. A kernel layer with multiple kernels may select a corresponding kernel for processing based on a system requirement.

The system service layer is a core capability set of the HarmonyOS. The system service layer provides services for applications through the framework layer. The layer may include the following:

Basic system capability subsystem set: the basic system capability subsystem set provides basic capabilities for operations such as running, scheduling, and migrating of distributed applications on a plurality of devices of the HarmonyOS, and may include a distributed soft bus, a distributed data management subsystem, a distributed scheduling subsystem, a multi-language runtime subsystem, a Utils subsystem, a multimode input subsystem, a graphics subsystem, a security subsystem, an artificial intelligence (Artificial Intelligence, AI) subsystem, a user program framework, and the like. The multi-language runtime subsystem provides a C, C++, or JavaScript (JS) multi-language runtime and a basic system class library, and may also provide a runtime for a Java program (namely, a part developed by using a Java language at the application layer or the framework layer) that is staticized by using a compiler.

Basic software service subsystem set: the basic software service subsystem set provides common and general software services for the HarmonyOS, and may include an event notification subsystem, a phone subsystem, a multimedia subsystem, a design for X (Design For X, DFX) subsystem, an MSDP&DV subsystem, and the like.

Enhanced software service subsystem set: the enhanced software service subsystem set provides differentiated enhanced software services for different devices, and may include a Vision-dedicated service subsystem, a wearable-dedicated service subsystem, and an internet of things (Internet of Things, IoT)-dedicated service subsystem.

Hardware service subsystem set: the hardware service subsystem set provides hardware services for the HarmonyOS, and may include a location subsystem, a biometric recognition subsystem, a wearable-dedicated hardware subsystem, an IoT dedicated hardware subsystem, and the like.

The framework layer provides, for HarmonyOS application development, a user program framework and an ability (Ability) framework in multiple languages, including Java, C, C++, and JS, two user interface (User Interface, UI) frameworks (including a Java UI framework applicable to Java language and a JS UI framework applicable to JS language), and various exposure multi-language framework application programming interfaces (Application Programming Interface, API) for software and hardware services. The APIs available for different HarmonyOS devices vary based on component-based tailoring.

The application layer includes system applications and third-party non-system applications. The system application may include applications installed by default on the electronic device, such as Desktop, Control bar, Settings, or Phone. The extended application may be an optional application developed and designed by a manufacturer of the electronic device, for example, Electronic device manager, Phone change and data migration, Note, Weather, or the like. The third-party non-system application may be developed by another vendor, but the application may be run in the HarmonyOS, for example, a game application, a navigation application, a social networking application, or a shopping application.

The application of the HarmonyOS includes one or more feature abilities (Feature Ability, FA) or particle abilities (Particle Ability, PA). The FA has a user interface (UI) and provides a capability of interacting with a user. The PA does not have a UI and provides a background task running capability and unified data access abstract. The PA mainly provides support for the FA. For example, the PA provides computing capabilities as a background service or provides data access capabilities as a data warehouse. Applications developed based on the FA or the PA can implement specific service functions and support cross-device scheduling and distribution, to provide consistent and efficient application experience for users.

A plurality of electronic devices running the HarmonyOS can implement hardware collaboration and resource sharing by using a distributed soft bus, distributed device virtualization, distributed data management, and distributed scheduling.

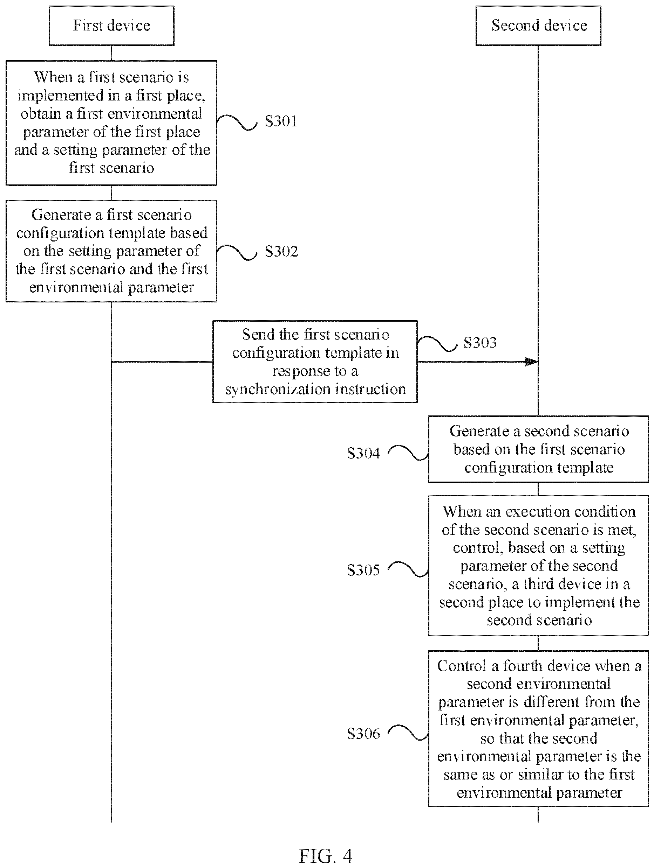

FIG. 4 is a schematic flowchart of a scenario synchronization method according to an embodiment of this application. By way of example, and not limitation, the method may be applied to a system including the first device and the second device, or some or all steps in the method may be applied to the first device or the second device.

S301: When a first scenario is implemented in a first place, the first device obtains a first environmental parameter of the first place and a setting parameter of the first scenario.

In some embodiments, the first place may be a permanent residence of a user, for example, a dormitory or a house. Certainly, this application is not limited thereto. The setting parameter of the first scenario may include one or more of an execution condition of the first scenario, a scenario type, a third device for implementing the first scenario, and a setting parameter of the third device.

In some embodiments, the first device may obtain the setting parameter of the first scenario by downloading from a server. In some embodiments, the first device may alternatively obtain the setting parameter of the first scenario by manually configuring the setting parameter by a user. In some embodiments, the first device may further receive a scenario configuration shared by another device, to obtain the setting parameter of the first scenario.

In some embodiments, the scenario type of the first scenario may include one or more of a trigger scenario, a timing scenario, and a manual scenario. If the scenario type of the first scenario is the trigger scenario, the first scenario is automatically entered when an execution condition is met; if the scenario type of the first scenario is the timing scenario, the first scenario is automatically entered when a preset time or duration condition is met; or if the scenario type of the first scenario is the manual scenario, the first scenario is entered when the user manually sends a control operation.

In some embodiments, if the scenario type is the trigger scenario, the setting parameter of the first scenario may further include a dependent device, and the dependent device may be configured to collect an environmental parameter. The first device may determine, based on the environmental parameter collected by the dependent device, whether the execution condition of the first scenario is met currently.

In some embodiments, when the execution condition of the first scenario is receiving a trigger instruction, the first device may determine that the scenario type of the first scenario is the trigger scenario, and record a dependent device of the execution condition and a trigger parameter. The trigger instruction may be sent by a gateway, the first device, or the server to the dependent device of the execution condition when the gateway, the first device, or the server determines that the obtained trigger parameter meets a preset condition, and the device that sends the trigger instruction is not limited. For example, the trigger parameter is "light intensity less than 100 lux from 19:00 to 23:00". When the gateway, the first device, or the server determines that the current time is within 19:00-23:00, and the light intensity obtained by using a photosensitive sensor disposed in the first place is less than 100 lux, the gateway, the first device, or the server may send a trigger instruction to a lamp, where the trigger instruction is used to control the lamp to be turned on and adjust brightness to 100%.

In some embodiments, when the execution condition of the first scenario is receiving a timing instruction, the first device may determine that the scenario type of the first scenario is the timing scenario. The timing instruction may be sent by the gateway, the first device, or the server to the dependent device of the execution condition after the gateway, the first device, or the server determines that a preset timing point is reached, and the device that sends the timing instruction is not limited. For example, the preset timing point is "7:00 a.m.". When determining that the current time is 7:00 a.m., the gateway, the first device, or the server may send the timing instruction to the lamp and the speaker, where the timing instruction is used to control the lamp to be turned on and adjust brightness to 30%, and control the speaker to play music and adjust volume to 20%.

In some embodiments, when the execution condition of the first scenario is receiving a manual instruction, the first device may determine that the scenario type of the first scenario is the manual scenario. The manual instruction is sent by the first device to a target device by using the gateway or the server after the first device receives an execution instruction from the user. For example, when the first device receives a user operation, the user operation indicates to turn on the air conditioner and set the air conditioner to "cooling, a temperature of 26 degrees Celsius, a silent mode, and vertical sweep". In this case, the first device generates an execution instruction based on the user operation, and sends the execution instruction to the air conditioner by using the gateway or the server. After receiving the execution instruction, the air conditioner starts to work in a mode "cooling, a temperature of 26 degrees Celsius, a silent mode, and vertical sweep".

In some embodiments, the first device may obtain a third device to be dependent upon during implementation of the first scenario and a setting parameter of the third device. For example, when the third device is an air conditioner, the setting parameter of the third device may include a working mode (cooling, heating, or dehumidification) and a temperature setting. When the third device is a humidifier, the setting parameter of the third device may include humidity, an air outlet volume, and the like. When the third device is a lamp, the setting parameter of the third device may include brightness, a light color temperature, and the like. When the third device is a speaker, the setting parameter of the third device may include a volume and the like.

In some embodiments, when the execution condition is met, a smart device in the first place works based on the set parameter of the first scenario, so as to implement the first scenario in the first place.

For example, it is assumed that the first scenario is a home-leaving scenario, the execution condition is that an intelligent lock is locked from the outside, and the setting parameter includes turning off the air conditioner, the lamp, and the speaker in the first place, and turning on an intelligent security protection device (for example, a smart camera, a mobile sensor, or an alarm). After the intelligent lock in the first place detects that the intelligent lock is locked from the outside, the intelligent lock reports the information to the gateway in the first place, so that the gateway in the first place determines that an execution condition of the away-home scenario is currently met, and controls, based on the setting parameter of the away-home scenario, the air conditioner, the lamp, and the speaker in the first scenario to stop working, and controls the intelligent security protection device to start working, so that the first scenario is implemented in the first place, or in other words, the first scenario is entered in the first place.

In some embodiments, the first device may further obtain the first environmental parameter used when the first scenario is implemented. A type of the first environmental parameter may include at least one of a temperature, humidity, light intensity, a light color temperature, air quality, and sound intensity. The parameter type of the first environmental parameter may be determined based on the setting parameter of the third device. For example, when the third device is an air conditioner, and the setting parameter of the third device includes a temperature, it may be determined that the type of the first environmental parameter includes the temperature. When the third device includes a humidifier and a lamp, and the setting parameter of the third device includes humidity and brightness, it may be determined that the type of the first environmental parameter includes the humidity and the brightness.

In some embodiments, after the first scenario is implemented in the first place, the gateway may collect the first environmental parameter by using a sensor (for example, a photosensitive sensor, a temperature sensor, or a humidity sensor), and send the first environmental parameter to the first device, so that the first device obtains the first environmental parameter used when the first scenario is implemented.

When sending the first environmental parameter to the first device, the gateway may send, through near-distance communication, the first environmental parameter to the first device that is communicatively connected to the gateway. Alternatively, the gateway may send the first environmental parameter to the server, so that the first device can obtain the first environmental parameter from the server. Alternatively, the first device may directly communicate with the sensor, to obtain the first environmental parameter collected by the sensor.

The sensor may include a sensor disposed in the third device in the first place, or may include a sensor independently disposed in the first place. There may be one or more first environmental parameters. For example, if there are a plurality of first environmental parameters, the first environmental parameter may include a plurality of parameters collected by the sensor at a fixed time interval in a period of time.

It should be understood that, in the embodiment in FIG. 4, an example in which step S301 is performed by the first device is used for description, but this does not constitute a limitation on embodiments of this application. Step S301 may alternatively be performed by the gateway in the first place or the server.

For example, Table 1 shows the setting parameters of the first scenario. In Table 1, the setting parameters of the first scenario include a scenario name, a scenario type, an execution condition, a dependent device of the execution condition, a third device for implementing the first scenario, a label of the third device, and a setting parameter of the third device.

**Table 1**

| | Setting parameters (1) of the first scenario | Setting parameters (2) of the first scenario | |
|---|---|---|---|
| Scenario name | Turning on a lamp in the living room at night | Wake-up | |
| Scenario type | Trigger scenario | Timing scenario | |
| Execution condition | Light intensity less than 100 lux from 19:00 to 23:00 | 7:00 a.m. | |
| Dependent device of the execution condition | Photosensitive sensor | None | |
| Third device | Lamp | Lamp | Speaker |
| Label of the third device | Living room, lighting | Bedroom, lighting | Bedroom |
| Setting parameter of the third device | Brightness (100) | Brightness (30) | Volume (20) |

Table 1 shows an example of two first scenarios. For example, a scenario name of one first scenario may be "turning on a lamp in the living room at night", a scenario type is the trigger scenario, an execution condition is "light intensity less than 100 lux from 19:00 to 23:00", a dependent device is the photosensitive sensor, a third device for implementing the first scenario is the lamp in the living room, and a configuration parameter of the third device is turning on the lamp in the living room and setting brightness to 100%. The photosensitive sensor is configured to obtain light intensity. The photosensitive sensor may be independently disposed in the living room, or may be integrated into any device in the living room, for example, may be integrated into a smart alarm clock, a smart television, a smart lamp, or the like.

The photosensitive sensor may report the first environmental parameter collected by the photosensitive sensor, for example, report the first environmental parameter collected by the photosensitive sensor to the gateway in the first place or to the first device at a fixed time interval. In some embodiments, the gateway in the first place or the first device may synchronize the first environmental parameter to the server, or may store the first environmental parameter locally in the gateway in the first place or the first device.

When the first device, the gateway in the first place, or the server determines that the light intensity of the living room obtained by the photosensitive sensor is less than 100 lux, and the current time is between 19:00 and 23:00, the first device, the gateway in the first place, or the server determines that the execution condition of the first scenario is met in this case, and therefore may send a turn-on instruction to the lamp in the living room. In some embodiments, the turn-on instruction may include parameters "turn on" and "brightness = 100", where "brightness = 100" may be determined based on the setting parameter of the third device "brightness (100)" in the setting parameters (1) of the first scenario shown in Table 1.

After receiving the turn-on instruction, the lamp in the living room is turned on and brightness of the lamp is set to 100%.

Then, after the lamp in the living room is turned on, the first device, the gateway in the first place, or the server may obtain the light intensity again by using the photosensitive sensor in the first place. For example, the light intensity obtained in this case is 350 lux. The first device, the gateway in the first place, or the server may determine that the first environmental parameter includes the light intensity, and a value is 350 lux. The gateway in the first place may be an independent gateway device, or may be a device integrated with a gateway function.

In some embodiments, when there are a plurality of sensors configured to obtain the first environmental parameter in the first scenario, the first environmental parameter obtained by a sensor that is not disposed on the third device may be used, to obtain an environmental parameter closer to user body sensing. Alternatively, an average value of the first environmental parameters obtained by the plurality of sensors is used.

For example, when the third device is an air conditioner, a temperature sensor is disposed at an air exhaust vent of the air conditioner, but a temperature of the air exhaust vent is different from an actual body sensing temperature of the user. For example, in a cooling mode, the temperature of the air exhaust vent of the air conditioner is usually lower than the actual body sensing temperature of the user. Therefore, if devices that can collect the temperature, such as an air purifier and a temperature and humidity sensor, are further disposed in the scenario, the temperature collected by these devices is generally closer to the actual body sensing temperature of the user than the temperature collected by the sensor at the air exhaust vent of the air conditioner. Therefore, the temperature collected by these devices may be used as the first environmental parameter. Alternatively, an average value of temperatures collected by the air conditioner and other devices may be used as the first environmental parameter. In this way, the first environmental parameter can more accurately represent an environmental parameter actually felt by the user in the first place, and more accurately reflect an actual feeling of the user, to provide more accurate reference data for a subsequent synchronization scenario.

For another example, Table 1 further shows another first scenario. The scenario name of the first scenario may further be "wake-up", the scenario type is a timing scenario, and the execution condition is that the time reaches 7:00 a.m. The third device for implementing the first scenario includes a lamp in the bedroom and a speaker in the bedroom. The configuration parameter of the third device includes: turning on the lamp in the bedroom and setting brightness to 30%, and the speaker in the bedroom playing music and setting volume to 20%.

When the first device, the gateway in the first place, or the server determines that the time reaches 7 a.m., the first device, the gateway in the first place, or the server determines that the execution condition of the first scenario is met in this case, and therefore may separately send the turn-on instruction to the lamp in the bedroom and the speaker in the bedroom. In some embodiments, the turn-on instruction sent to the lamp may include parameters "turn on" and "brightness = 30", where "brightness = 30" may be determined based on the setting parameter of the third device "brightness (30)" in the setting parameters (2) of the first scenario shown in Table 1. The turn-on instruction sent to the speaker may include parameters "turn on", "play an alarm", and "volume = 20", where "volume = 20" may be determined based on the setting parameter of the third device "volume (20)" in the setting parameters (2) of the first scenario shown in Table 1. After receiving the turn-on instruction, the lamp in the bedroom is turned on and brightness of the lamp is set to 30%. After receiving the turn-on instruction, the speaker in the bedroom is turned on and plays a preset audio file, and the volume is set to 20%. Then, the first device, the gateway in the first place, or the server obtains light intensity by using a photosensitive sensor disposed in the bedroom or a device including the photosensitive sensor, and uses the light intensity as the first environmental parameter. For example, when the light intensity obtained by the first device, the gateway in the first place, or the server is 200 lux, the first environmental parameter includes the light intensity, and a value is 200 lux. Then, the setting parameter of the first scenario and the first environmental parameter may be sent to the first device by using the gateway in the first scenario, so that the first device obtains the setting parameter of the first scenario and the first environmental parameter.

S302: The first device generates a first scenario configuration template based on the setting parameter of the first scenario and the first environmental parameter.

In some embodiments, the first scenario configuration template includes at least the setting parameter of the first scenario and the first environmental parameter. The first device may generate the first scenario configuration template by adding the first environmental parameter on the basis of the setting parameter of the first scenario.

In some embodiments, the first scenario configuration template may be stored in a form of a table or in a form of an extensible markup language (xml) configuration file and the like. In this application, a table is used as an example to describe the first scenario configuration template, but an implementation form and a storage form of the first scenario configuration template are not limited thereto. The first scenario configuration template may be stored in the first device, or may be sent to the server by using the first device and stored in the server.

Table 2 shows the first scenario configuration template in two examples in S301.

**Table 2**

| Configuration parameter | First scenario configuration template (1) | First scenario configuration template (2) | |
|---|---|---|---|
| Scenario name | Turning on a lamp in the living room at night | Wake-up | |
| Scenario type | Trigger scenario | Timing scenario | |
| Execution condition | Light intensity less than 100 lux from 19:00 to 23:00 | 7:00 a.m. | |
| Dependent device of the execution condition | Photosensitive sensor | None | |
| Third device | Lamp | Lamp | Speaker |
| Label of the third device | Living room, lighting | Bedroom, lighting | Bedroom |
| Setting parameter of the third device | Brightness (100) | Brightness (30) | Volume (20) |
| First environmental parameter | Light intensity: 350 lux | Light intensity: 200 lux | |
| Label of the first | Light intensity in the living | Light intensity in the bedroom | |

| Configuration parameter | First scenario configuration template (1) | First scenario configuration template (2) | |
|---|---|---|---|
| environmental parameter | room | | |

The scenario name may be a name used when the first scenario is created, and the label of the third device may be a label added based on a function and a location of the third device when the third device accesses the gateway. The label of the first environmental parameter may be generated based on the location of the third device and a parameter included in the first environmental parameter.

It can be learned that, compared with the setting parameter of the first scenario obtained in step S301, at least the first environmental parameter is added to the first scenario configuration template generated in step S302. The first environmental parameter indicates a real parameter, of an environment, felt by the user in the first scenario. The first environmental parameter is added to the first scenario configuration template, and the scenario is configured in a new environment based on the first scenario configuration template during scenario synchronization, so that the scenario obtained through synchronization in the new environment can provide environment experience the same as that of the first scenario in the first place, thereby improving user experience.

It should be understood that the setting parameter of the first scenario and the first scenario configuration template are merely used as an example rather than a limitation. When a person skilled in the art applies this solution, the setting parameter of the first scenario and the first scenario configuration template may be configured to include more or fewer parameters.

It should be understood that, in the embodiment in FIG. 4, an example in which step S302 is performed by the first device is used for description, but this does not constitute a limitation on embodiments of this application. Step S302 may alternatively be performed by the gateway in the first place or the server.

S303: The first device sends the first scenario configuration template to the second device in response to a synchronization instruction.

In some embodiments, the second device may be a gateway in a second place. The second place may be an unfamiliar residence. For example, the user goes to a hotel on a business trip. In this case, the hotel may be understood as the second place, and a gateway in a hotel room may be understood as the second device. The user may operate a mobile phone (which may be understood as the first device) of the user, so that the mobile phone sends the first scenario configuration template to the gateway in the hotel room.

In some embodiments, the synchronization instruction instructs the first device to synchronize at least one stored first scenario to the second device. For example, when the first scenario configuration template is stored in the first device, the first device may send the first scenario configuration template to the second device in response to the synchronization instruction. For example, the first device is a mobile phone, and the second device is a central control panel integrated with a gateway function. The first device and the second device may be communicatively connected to each other through a local area network, Bluetooth, Wi-Fi, or the like. After the first device and the second device are communicatively connected to each other and establish a communication channel, the first device may send the first scenario configuration template stored in the first device to the second device through the communication channel after receiving the synchronization instruction that instructs to synchronize the first scenario.

In some embodiments, the synchronization instruction may be an instruction corresponding to or triggered by a user operation. For example, if the first device receives a voice instruction sent by the user, and the voice instruction instructs the first device to perform scenario synchronization with the second device, the voice instruction is the synchronization instruction. For another example, if the first device receives a touch operation of the user, and the touch operation is performed on a "scenario synchronization" control on a user interface displayed on a touchscreen of the first device, an instruction corresponding to the touch operation is the synchronization instruction.

In some embodiments, the synchronization instruction may alternatively be automatically generated after the first device enters the second place and establishes a communication connection to the second device. For example, after entering the second place, the first device is connected to the second device through a wireless network, a short-distance communication network, or the like. The first device may send the first scenario configuration template to the second device in response to a message indicating that the first device is successfully connected to the second device. In this case, the synchronization instruction is the message indicating that the first device is successfully connected to the second device.

It should be understood that the synchronization instruction may alternatively be implemented in another manner. This application is not limited to the foregoing example.

It should be understood that, in the embodiment in FIG. 4, an example in which step S303 is performed by the first device is used for description, but this does not constitute a limitation on embodiments of this application.

For example, step S303 may alternatively be "the first device instructs the server to send the first scenario configuration template to the second device in response to the synchronization instruction". Specifically, for example, when the first scenario configuration template is stored in the server, the first device may send a synchronization message to the server, where the synchronization message indicates the server to send the first scenario configuration template to the second device. For example, the first device is a mobile phone, and the second device is a central control panel integrated with a gateway function. Both the first device and the second device are connected to the server through a network. The first device has uploaded the obtained first scenario configuration template to the server for storage. After receiving the synchronization instruction that instructs to synchronize the first scenario, the first device may send the synchronization message to the server, where the synchronization message indicates the server to synchronize the first scenario configuration template to the second device. Therefore, in some embodiments, the synchronization message may include an identifier of the first scenario configuration template and an address of the second device. Therefore, after receiving the synchronization message, the server may send the first scenario configuration template to the second device based on the synchronization message.

For another example, step S303 may alternatively be "the second device obtains the first scenario configuration template from the server". Specifically, for example, when the first scenario configuration template is stored in the server, the second device may alternatively directly download the first scenario configuration template from the server. For example, after the second device is connected to the server through the network, the second device may first obtain names or identifiers of a plurality of first scenario configuration templates from the server, and display the names or identifiers of the plurality of first scenario configuration templates on a screen of the second device. The user may select one or more first scenario configuration templates from the plurality of first scenario configuration templates for synchronization by touching the screen of the second device. For example, a "wake-up scenario" and a "home-leaving scenario" are displayed on the screen of the second device. After selecting the "wake-up scenario" from the two scenarios, the user taps a "scenario synchronization" control, and the second device sends, to the server, a request used to obtain the "wake-up scenario". The server sends a "wake-up scenario" configuration template to the second device in response to the request.

S304: The second device generates a second scenario based on the first scenario configuration template.

In some embodiments, that the second device generates the second scenario may be specifically: creating a new second scenario in the second device, or adjusting the existing second scenario in the second device.

In some embodiments, the second device may create, based on the received first scenario configuration template, the second scenario with a same function. The "same function" may mean that a same or similar third device in the first scenario and the second scenario performs a same action. For example, refer to the first scenario configuration template (1) in Table 2. The first scenario is "turning on a lamp in the living room at night", and the second scenario generated based on the first scenario configuration template (1) also needs to implement a function of turning on a lamp when the light intensity is less than 100 lux in a time period 19:00 to 23:00.

In some embodiments, the second device may be disposed in the second place, and the second place may be an unfamiliar residence, for example, a hotel, an apartment, or the like. After receiving the first scenario configuration template, if the scenario type is the trigger scenario, the second device needs to determine whether the second place includes a dependent device of an execution condition of the first scenario configuration template. If the second place does not include the dependent device of the execution condition of the first scenario configuration template, the second device determines that the second scenario fails to be created, and the scenario needs to be manually set. Manually setting the scenario means that the second device needs to receive scenario configuration information from the user, and then create the second scenario based on the scenario configuration information from the user.

In some embodiments, when S304 is performed, the second device may first generate a setting parameter of the second scenario based on the first scenario configuration template, where the setting parameter of the second scenario does not include the first environmental parameter; and then create the second scenario based on the setting parameter of the second scenario.

It should be understood that, in the embodiment in FIG. 4, an example in which step S304 is performed by the second device is used for description, but this does not constitute a limitation on embodiments of this application. Step S304 may alternatively be performed by the first device or the server.

For example, refer to the first scenario configuration template (2) shown in Table 2. When the setting parameters (2) of the second scenario are generated based on the first scenario configuration template (2), whether a corresponding third device is included in the second place may be first determined based on the first scenario configuration template (2).

For example, in some embodiments, the third device in the first scenario configuration template (2) includes a lamp and a speaker. When the second place includes the lamp and the speaker, and labels of the lamp and the speaker include "bedroom", the second device may determine that the second place includes the third device.

Alternatively, in some other embodiments, a room layout of the second place is different from that of the first place, and regions such as a bedroom and a living room may not be classified in the second place. As a result, the label of the lamp is not marked by using "bedroom". For example, the label of the lamp in the second place may include "bedside", "porch", "washroom", or the like. In this case, intelligent matching may be performed on the label of the lamp in the second place by using a preset correspondence based on the label "bedroom" of the lamp in the first scenario configuration template (2), to determine whether the second place includes the corresponding third device. The preset correspondence may include a correspondence between a label indicating a region and a keyword indicating the region in the first scenario configuration template (2).

In some embodiments, when it can be determined, based on the preset correspondence, that the label of the lamp in the second place includes a keyword corresponding to "bedroom", it may be determined that the second place includes the third device. For example, in the preset correspondence, the keyword that may correspond to "bedroom" may include "bed", "entire house", "desk", and the like, and the label of the lamp in the second place is "bedside". If "bedside" includes a keyword "bed" corresponding to the bedroom, it may be determined that the second place includes the third device.

In some other embodiments, when the second place includes a plurality of third devices, device information of the plurality of third devices may be displayed on the second device, and a selection operation of the user is received by using the second device. The selection operation of the user indicates to select at least one third device in the second place. After receiving the selection operation, the second device may determine that the second place includes the third device. For example, when the second place includes a plurality of lamps, device information (such as a label, a model, power, and a schematic diagram) of all lamps may be displayed on the second device. When the second device receives a tap operation performed on a device information display region of one of the lamps, it is determined that the second device receives the selection operation, that is, it may be determined that the second place includes the third device.

It should be noted that, in some embodiments, the device information of the plurality of third devices may be displayed on the first device that is communicatively connected to the second device, and the selection operation of the user may be received by using the first device. After receiving the selection operation, the first device may send the device information of the third device indicated by the selection operation to the second device. After receiving the device information of the third device from the first device, the second device may determine that the second place includes the third device, or determine the third device.

In some embodiments, after determining that the second place includes the third device, the second device may generate the setting parameter of the second scenario based on the setting parameter of the third device in the first scenario configuration template, and set the third device. For example, the second device may generate the setting parameter of the second scenario based on the setting parameter of the third device in the first scenario configuration template (2), and set the third device.

However, in some embodiments, due to performance, a model, and the like of the device, a configuration manner of the third device in the second scenario may be different from that of the third device in the first scenario. For example, the lamp in the first scenario may be adjusted in a stepless manner, and brightness of any value from 0% to 100% may be set during configuration. However, the lamp in the second scenario has limited levels, for example, three levels (corresponding to 33%, 66%, and 100% of stepless adjustment), five levels (corresponding to 20%, 40%, 60%, 80%, and 100% of stepless adjustment), or the like. Only one level can be specified during configuration. As a result, the third device in the second scenario cannot be accurately set based on the setting parameter of the third device in the first scenario configuration template (2).

In this case, a corresponding level may be determined based on a quantity of levels of the third device in the second scenario by determining a parameter set by the third device in the first scenario.

In some embodiments, if the third device in the second scenario is a three-level lamp, the third device in the first scenario is a stepless lamp. When the brightness of the third device in the first scenario is 0% to 33%, the third device in the second scenario may be set to a first level (33%); when the brightness of the third device in the first scenario is 34% to 66%, the third device in the second scenario may be set to a second level (66%); and when the brightness of the third device in the first scenario is 67% to 100%, the third device in the second scenario may be set to a third level (100%).

In this embodiment, the third device in the first scenario is mapped to a corresponding level based on the quantity of levels of the third device in the second scenario. This can improve compatibility of scenario synchronization, and improve a success rate of scenario synchronization.

In some embodiments, for setting parameters (2) of the second scenario, refer to Table 3.

**Table 3**

| Configuration parameter | Setting parameters (2) of the second scenario | |
|---|---|---|
| Scenario name | Wake-up | |
| Scenario type | Timing scenario | |
| Execution condition | 7:00 a.m. | |
| Dependent device of the execution condition | None | |
| Third device | Lamp | Speaker |
| Label of the third device | Bedroom, lighting | Bedroom |
| Setting parameter of the third device | Brightness (30) | Volume (20) |

If the scenario type is the timing scenario or the manual scenario, or the second place includes the dependent device of the execution condition of the first scenario configuration template, whether the second place includes the third device is detected.

In some embodiments, when the second place includes the third device, the second device or the server sets the third device based on the setting parameter of the third device, successfully creates the second scenario, and generates the setting parameter of the second scenario.

In some embodiments, the second device or the server may set the third device in the second place based on the setting parameter of the second scenario, to create the second scenario. After the second scenario is created, related data (for example, the setting parameter of the second scenario) of the second scenario may be stored in the second device, or may be uploaded to the server connected to the second device. For example, a scenario list of the second place may be set in the second device. After the second scenario is created, the second scenario may be added to the scenario list of the second place. When the second scenario can be found in the scenario list of the second place, it may be determined that the second scenario is successfully created.

In some embodiments, the scenario of the second place may be further managed and viewed by using the first device. For example, after the second scenario is created in the second device, the setting parameter of the second scenario may be sent to and/or stored in the first device, and managed by the first device.

In some embodiments, the scenario list of the second place may be generated in the first device, and the scenario list of the second place may be displayed on a screen of the first device, so that the user manages the scenario of the second place by using the first device. Each time the second device creates the second scenario, the first device may receive the setting parameter of the second scenario from the second device, and add the second scenario to the scenario list of the second place. When displaying the scenario list of the second place, the first device may receive an operation performed by the user on the display region, and set a corresponding scenario based on the user operation.

In some embodiments, after the second scenario is created, prompt information indicating that the second scenario is successfully created may be further displayed on the screen of the first device and/or the second device. For example, refer to the setting parameters (2) of the second scenario in Table 3. Prompt information "the wake-up scenario has been successfully configured in the new environment" may be displayed on the screen of the first device and/or the second device based on the scenario name of the second scenario.

When the second place does not include the third device, it is determined that the second scenario fails to be created, and the scenario needs to be manually set.

In some embodiments, refer to the first scenario configuration template (2) shown in Table 2. When the second place does not include a lamp and/or a speaker, or the labels of the lamp and the speaker do not include "bedroom", the second device may determine that the second place does not include the third device. For example, when the second place includes a lamp, but the label of the lamp is "toilet", or the second place includes only a lamp or only a speaker, it may be determined that the second place does not include the third device.

In some embodiments, when the second place includes only a lamp or only a speaker, and the label of the lamp or the speaker includes "bedroom", the user may be prompted whether to create the second scenario that includes only an existing device because some necessary devices are missing in a process of creating the second scenario. For example, when the second place includes only a lamp, and the label of the lamp includes "bedroom", prompt information may be displayed on the first device and/or the second device: "No available speaker device exists in the current environment. Continue to create a scenario based on the existing device?"

When receiving a creation confirmation instruction from the user, the second device may create the second scenario that includes only the lamp. When receiving a creation stop instruction from the user, the second device determines that the second scenario fails to be created. Then, the second device may receive scenario configuration information from the user, and then create the second scenario based on the scenario configuration information from the user. The confirmation instruction of the user may be forwarded by the first device, or may be directly received by the second device.

For example, refer to the first scenario configuration template (2) in Table 1. When the second place includes a lamp and a speaker, and the labels of the lamp and the speaker include "bedroom", the second scenario may be created based on the first scenario configuration template (2). Content of the second scenario is that at 7:00 a.m., the lamp in the bedroom is turned on and brightness is set to 30%, and the speaker in the bedroom plays music and volume is set to 20%. After the second device successfully creates the second scenario, when the user lives in the second place and the time reaches 7 a.m., the lamp is automatically turned on in the bedroom, and the speaker plays music, so that the user can wake up from sleep.

For another example, still refer to the first scenario configuration template (2) in Table 1. When the second place includes only a lamp and the label of the lamp includes "bedroom", prompt information may be displayed on the first device: "No available speaker device exists in the current environment. Continue to create a scenario based on the existing device?" After receiving the creation confirmation instruction from the user, the first device forwards the creation confirmation instruction to the second device. After receiving the creation confirmation instruction, the second device may create the second scenario that includes only the lamp. To be specific, the content of the second scenario is that at 7:00 a.m., the lamp in the bedroom is turned on and brightness is set to 30%.

S305: When an execution condition of the second scenario is met, the second device controls, based on the setting parameter of the second scenario, the third device in the second place to implement the second scenario.

S306: Control a fourth device when a second environmental parameter is different from the first environmental parameter, so that the second environmental parameter is the same as or similar to the first environmental parameter.

It should be further noted that the second environmental parameter is similar to the first environmental parameter. In some embodiments, when the first environmental parameter and the second environmental parameter include one parameter, a difference between the second environmental parameter and the first environmental parameter may be less than a preset threshold. Alternatively, a ratio of the second environmental parameter to the first environmental parameter is close to 1.

In some embodiments, when the first environmental parameter and the second environmental parameter include a plurality of parameters collected within a time period, the first environmental parameter and the second environmental parameter may be represented in a form of a curve or an array. That the second environmental parameter is similar to the first environmental parameter may be that a similarity between a curve or an array used to represent the second environmental parameter and a curve or an array used to represent the first environmental parameter is close to 1, or may be that a distance between a curve used to represent the second environmental parameter and a curve used to represent the first environmental parameter is close to 0, an average value of the first environmental parameter is close to an average value of the second environmental parameter, or the like. This is not limited in this application. The average value may alternatively be a mode, a harmonic average value, an average value obtained after the maximum and minimum values are removed, an average value obtained after a plurality of larger and smaller values are removed, or the like.

In some embodiments, due to a difference between a geographical location of the second place and a geographical location of the first place, and a difference between a model and performance of the third device in the second place and a model and performance of the third device in the first place, when the second scenario is implemented in the second place, the second environmental parameter may be different from the first environmental parameter. As a result, when the second scenario is implemented in the second place, the user cannot obtain experience obtained when the first scenario is implemented in the first place.

In some embodiments, the fourth device and the third device may be in a same region, or may be in different regions. For example, when the third device is disposed in the living room, the fourth device may be a device in the living room, or may be a device in a dining room. A location relationship between the third device and the fourth device is not limited in this application. In some embodiments, the third device and the fourth device may be devices of a same type. For example, both the third device and the fourth device are air conditioners, but are disposed in different regions. For example, the third device is an air conditioner in the living room, and the fourth device is an air conditioner in the bedroom. In some embodiments, the third device and the fourth device may be devices of different types. For example, the third device may be a lamp, and the fourth device may be a smart curtain. It can be determined that a device is the fourth device provided that when the device is controlled, the second environmental parameter may be close to the first environmental parameter.

In some embodiments, the second device may first obtain a capability set of each device in the second place. The capability set may be preset for each device, and is used to indicate a capability of the device. In some embodiments, a specific form of the capability set may be a preset data structure, a configuration file, or the like. For example, if the device is an air conditioner, a capability set may be set before delivery. For the air conditioner, the capability set may include at least capabilities such as cooling, heating, dehumidification, and temperature measurement.

In some embodiments, the capability set of the device may be stored in a memory inside the device, and the capability set of the device may be modified, for example, some capabilities may be added or deleted. For example, after accessing the network through the gateway, the device may communicate with a corresponding server, to receive a capability set delivered by the server, and update the received capability set to the device locally.

In some embodiments, after obtaining the capability set of each device, the second device may determine the fourth device based on a type of the second environmental parameter and location information of each device.

For example, if the second environmental parameter is light intensity, the capability set of the device needs to include a brightness adjustment capability. If the second environmental parameter is a temperature, the capability set of the device needs to include a cooling or heating capability.

In some embodiments, if the second environmental parameter is the light intensity, after a plurality of devices having the brightness adjustment capability are determined, it further needs to be determined whether the devices are capable of affecting the second environmental parameter of a region in which the third device is located. For example, location information of the third device may be first obtained, and the location information of the third device may be preset when the third device is installed in the second place.

In some embodiments, it may be determined, based on the location information of the third device, that devices at a same or similar location in the plurality of devices having the brightness adjustment capability are the fourth devices. For example, if the third device is disposed in the bedroom, it may be determined that a device that is disposed in the bedroom and has the brightness adjustment capability is the fourth device. Alternatively, if the third device is disposed in the living room, it may be further determined, based on a location relationship between the living room and another region in the second place, that a device having the brightness adjustment capability in a balcony or the dining room is the fourth device.

A location relationship between each region and another region in the second place may be preset during device installation. For example, if the regions between the living room, the dining room, and the balcony are connected, it may be determined that a device disposed in any one of the living room region, the dining room region, or the balcony region is capable of affecting environmental parameters of the other two regions when running.

For example, the second environmental parameter of the living room region is the light intensity. In the second scenario, if the light intensity of the living room region is still less than the first environmental parameter after the lamp in the living room is turned on, the second device may determine that the device in the dining room is the fourth device. For example, the second device may control a lamp in the dining room to be turned on, to improve the light intensity of the living room region, so that a difference between the second environmental parameter and the first environmental parameter is less than a preset threshold.

In some embodiments, a plurality of regions may be isolated by isolation devices such as a door, a curtain, or a movable partition. Each isolation device may be provided with a sensor for detecting an opening/closing status of the isolation device. When detecting, by using the sensor, that the isolation device isolates a region, the second device may determine that a running status of a device in the isolated region cannot affect an environmental parameter of another region.

For example, if the second environmental parameter of the bedroom in the second scenario is the light intensity, the living room region is isolated from the bedroom by using a door. In the second scenario, if the light intensity of the bedroom is still less than the first environmental parameter after the lamp in the bedroom is turned on, the second device may first obtain an opening/closing status of a bedroom door. If the bedroom door is open, the second device may determine that the device in the living room is the fourth device. For example, the second device may control a lamp in the living room to be turned on, to improve the light intensity of the bedroom, so that the difference between the second environmental parameter and the first environmental parameter is less than the preset threshold. If the bedroom door is closed, the second device may determine that the device in the bedroom is the fourth device. For example, if it is determined, based on local sunrise and sunset times, that the current time period is daytime, the second device may control a smart curtain in the bedroom to be opened, to increase the light intensity of the bedroom, so that the difference between the second environmental parameter and the first environmental parameter is less than the preset threshold.

Based on the foregoing embodiments, the second device may further record a material of an isolation device between different regions, and determine, based on the material of the isolation device, whether a running status of a device in the isolated region affects an environmental parameter of another region. For example, if the dining room region is isolated from the living room region by using a glass door, a running status of the air conditioner in the dining room region cannot affect a temperature of the living room, but a running status of the lamp in the dining room region can affect light intensity of the living room.

In some embodiments, the second device may determine the fourth device based on the label of the third device. The label of the third device may be set by the user when the third device is installed in the second place. The second device may record the label of the third device. Certainly, the third device may also record the label of the third device. It should be understood that a label of another device disposed in the second place may also be described above.

In some implementations, when a label of a device in the second place includes a label the same as the label of the third device, it may be determined that the device is the fourth device. The label may indicate a capability or a location of the device. The same label may indicate that the device has a same capability as the third device or is installed in a same region as the third device. Therefore, the device may also affect the second environmental parameter. Therefore, the second device controls the fourth device in the second place, so that the difference between the second environmental parameter and the first environmental parameter is less than the preset threshold. The preset threshold may be a value or a percentage. For example, the difference between the second environmental parameter and the first environmental parameter may be set to be less than 5%, 10%, or the like.

For example, after the second device creates the second scenario corresponding to the first scenario configuration template (2) shown in Table 2, at 7 a.m., the lamp in the bedroom is turned on and brightness is set to 30%, and the speaker in the bedroom plays music and volume is set to 20%. Because the lamp in the second place and the lamp in the first place may be disposed at different positions and have different power, and areas of the second place and the first place may also be different, when the brightness is both set to 30%, the provided light intensity is also different. For example, the second device may obtain, by using a photosensitive sensor disposed in the bedroom or a device integrated with a photosensitive sensor, the second environmental parameter of the second scenario that is light intensity of 150 lux. In this case, the second environmental parameter is less than the first environmental parameter.

In some implementations, because the lamp is disposed in the bedroom, the fourth device that is disposed in the bedroom and that is capable of affecting the light intensity needs to be determined, to change the light intensity in the bedroom. For example, the fourth device may be determined based on the label "bedroom" and "lighting" of the third device (namely, the lamp) related to the light intensity. When a label of the fourth device includes "bedroom" and "lighting", it indicates that a working status of the fourth device is capable of affecting the light intensity in the bedroom. For example, the fourth device may be a smart curtain in the bedroom. After it is determined that the fourth device is the smart curtain in the bedroom, if it is determined, based on the local sunrise and sunset times, that the current time period is daytime. The second device may control the fourth device (namely, the smart curtain in the bedroom) to run, to adjust the light intensity in the bedroom to 200 lux or close to 200 lux. As the smart curtain in the bedroom is opened, the light intensity in the bedroom increases accordingly. The second device stops opening the curtain until the light intensity of the bedroom is the same as 200 lux or the difference is less than the preset threshold (for example, 5%). In this case, the light intensity in the second place is basically consistent with as the light intensity obtained when the first scenario is implemented in the first place. This can bring consistent experience to the user.

In some other embodiments, the second device may further adjust a parameter of the third device, so that the difference between the second environmental parameter and the first environmental parameter is less than the preset threshold. For example, the second device may control brightness of the lamp, to enhance the brightness of the lamp, and stop enhancing the brightness of the lamp until the light intensity of the bedroom is equal to 200 lux or the difference is less than 5%.

In some other embodiments, the second device may control both the third device and the fourth device, so that the difference between the second environmental parameter and the first environmental parameter is less than the preset threshold. For example, the second device may control brightness of the lamp, to enhance the brightness of the lamp. When the brightness of the lamp cannot continue to be enhanced, but the light intensity of the bedroom still does not reach 200 lux or the difference between the light intensity of the bedroom and 200 lux is less than 5%, the second device may control the fourth device (the smart curtain in the bedroom) to run, and stop opening the curtain until the light intensity of the bedroom is the same as 200 lux or the difference is less than 5%. Alternatively, the second device may first control the smart curtain in the bedroom to run. After the smart curtain is completely opened, if the light intensity of the bedroom still does not reach 200 lux or the difference between the light intensity of the bedroom and 200 lux is less than 5%, the second device may control the brightness of the lamp, enhance the brightness of the lamp until the light intensity of the bedroom is the same as 200 lux or the difference is less than 5%, and stop enhancing the brightness of the lamp.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

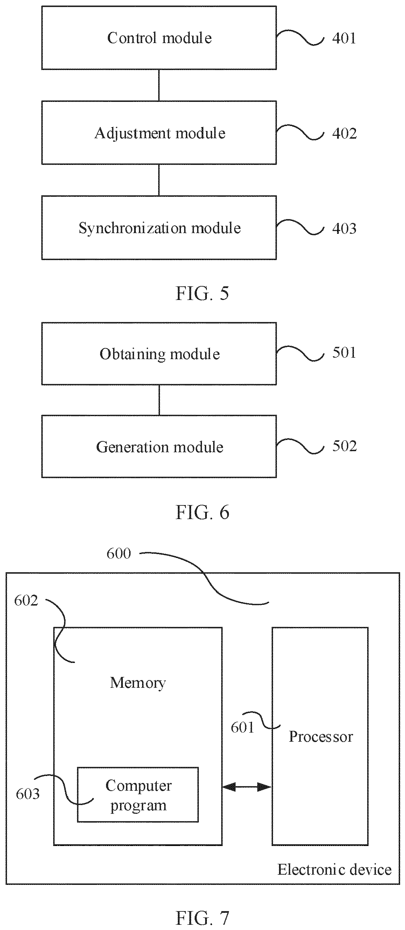

Corresponding to the scenario synchronization method applied to the second device in the foregoing embodiments, FIG. 5 is a block diagram of a structure of a scenario synchronization apparatus according to an embodiment of this application. For ease of description, only a part related to this embodiment of this application is shown.

Refer to FIG. 5. A scenario synchronization apparatus is applied to a second device, and includes:
a control module 401, configured to control a third device in a second place based on a setting parameter of a second scenario, to implement the second scenario in the second place, where the second scenario is a scenario that is generated by the second device based on a setting parameter of a first scenario in a first place and that has a same function, and the setting parameter of the second scenario is generated based on the setting parameter of the first scenario; and
an adjustment module 402, configured to control a fourth device in the second place when a second environmental parameter is different from a first environmental parameter, so that a difference between the second environmental parameter and the first environmental parameter is less than a preset threshold, where the first environmental parameter is an environmental parameter used when the first scenario is implemented in the first place, and the second environmental parameter is an environmental parameter used when the second scenario is implemented in the second place.

In some embodiments, the first environmental parameter or the second environmental parameter includes at least one of the following environmental parameters: a temperature, humidity, light intensity, a light color temperature, air quality, and sound intensity.

In some embodiments, the adjustment module 402 is further configured to control at least one third device, so that the difference between the second environmental parameter and the first environmental parameter is less than the preset threshold.

In some embodiments, the apparatus further includes a synchronization module 403, configured to: receive a first scenario configuration template, where the first scenario configuration template includes the setting parameter of the first scenario and the first environmental parameter of the first scenario, and the setting parameter of the first scenario includes an execution condition of the first scenario, the third device for implementing the first scenario, and a setting parameter of the third device; and create the second scenario based on the first scenario configuration template.

In some embodiments, the setting parameter of the first scenario further includes a scenario type. The synchronization module 403 is specifically configured to: set the execution condition of the second scenario based on the execution condition of the first scenario and the scenario type, where the scenario type includes a trigger scenario, a timing scenario, or a manual scenario; and when the second place includes the third device for implementing the first scenario, set a setting parameter of the third device in the second scenario based on the setting parameter of the third device in the first scenario.

In some embodiments, the synchronization module 403 is further configured to: when the scenario type is the trigger scenario, obtain a dependent device of the execution condition of the first scenario and a trigger parameter; and when the second place includes the dependent device of the execution condition of the first scenario, set the execution condition of the second scenario based on the trigger parameter.

In some embodiments, the synchronization module 403 is further configured to: when the scenario type is the timing scenario or the manual scenario, set the execution condition of the first scenario as the execution condition of the second scenario.

In some embodiments, the synchronization module 403 is specifically configured to: when a setting scale of the third device in the first scenario is different from a setting scale of the third device in the second scenario, map, based on the setting scale of the third device in the second scenario, the setting parameter of the third device in the first scenario to a corresponding setting parameter in the setting scale of the third device in the second scenario; and set the setting parameter of the third device in the second scenario based on the setting parameter obtained through mapping.

In some embodiments, the synchronization module 403 is further configured to: obtain a location label and a capability label of the third device, and determine a device including the location label and the capability label of the third device as the fourth device.

In some embodiments, the synchronization module 403 is further configured to determine, based on a location label and a capability label of the third device, a device that is located in a second region and that is capable of affecting the second environmental parameter as the fourth device, where the location label of the third device is used to indicate that the third device is located in a first region in the second place, the first region is connected to or adjacent to the second region, and the capability label of the third device is used to indicate that the third device is capable of affecting the second environmental parameter.

In some embodiments, the synchronization module 403 is further configured to obtain at least one second region based on preset location relationships between a plurality of regions in the second place and the first region, where the second region is connected to or adjacent to the first region.

In some embodiments, the second region further includes an availability status, and the availability status includes available and unavailable. The synchronization module is specifically configured to: when an isolation device is disposed between the first region and the at least one second region, obtain an isolation status of each isolation device; and determine an availability status of each second region based on the isolation status of each isolation device.

In some embodiments, the synchronization module 403 is specifically configured to: when the isolation device between the second region and the first region does not isolate the first region from the second region, determine that an availability status of a second region that is not isolated is available; or when the isolation device between the second region and the first region isolates the first region from the second region, determine that an availability status of a second region that is not isolated is unavailable.

In some embodiments, the adjustment module 402 is specifically configured to: when the second environmental parameter is different from the first environmental parameter, control a running status of the fourth device, so that a difference between the second environmental parameter and the first environmental parameter is less than or equal to a preset threshold.

In some embodiments, the adjustment module 402 is specifically configured to: when the second environmental parameter is different from the first environmental parameter, control a running status of the fourth device, so that a ratio of the second environmental parameter to the first environmental parameter approaches 1.

Corresponding to the scenario synchronization method applied to the first device in the foregoing embodiments, FIG. 6 is a block diagram of a structure of a scenario synchronization apparatus according to an embodiment of this application. For ease of description, only a part related to this embodiment of this application is shown.

Refer to FIG. 6. A scenario synchronization apparatus is applied to a first device, and includes:
an obtaining module 501, configured to: when a first scenario is implemented in a first place, obtain a first environmental parameter of the first place and a setting parameter of the first scenario; and
a generation module 502, configured to generate a first scenario configuration template based on the setting parameter of the first scenario.

In some embodiments, the generation module 502 is specifically configured to: determine a scenario type of the first scenario based on an execution condition of the first scenario, where the scenario type includes a trigger scenario, a timing scenario, or a manual scenario; obtain a third device to be dependent upon during implementation of the first scenario and a setting parameter of the third device; and generate the first scenario configuration template based on the execution condition of the first scenario, the scenario type, the third device for implementing the first scenario, and the setting parameters of the third device.

In some embodiments, the generation module 502 is further configured to: when the execution condition of the first scenario includes responding to a trigger instruction, determine that the first scenario is the trigger scenario, where the trigger instruction is sent when a trigger parameter collected by a dependent device that determines the execution condition of the first scenario meets a preset condition.

In some embodiments, the generation module 502 is further configured to: when the execution condition of the first scenario is responding to a timing instruction, determine that the first scenario is the timing scenario, where the timing instruction is sent by the first device at a preset timing point.

In some embodiments, the generation module 502 is further configured to: when the execution condition of the first scenario is responding to a manual instruction, determine that the first scenario is the manual scenario, where the manual instruction is sent by the first device according to an execution instruction after receiving the execution instruction from a user.

It should be noted that content such as information exchange between the foregoing modules and an execution process is based on a same concept as that in the method embodiments of this application. For specific functions and technical effects of the content, refer to the method embodiments. Details are not described herein again.

It may be clearly understood by a person skilled in the art that, for the purpose of convenient and brief description, division into the foregoing function units and modules is used as an example for illustration. In actual application, the foregoing functions can be allocated to different function units and modules for implementation based on a requirement, that is, an inner structure of the apparatus is divided into different function units or modules to implement all or some of the functions described above. Function units and modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units and modules in the foregoing system, refer to a corresponding process in the foregoing method embodiments. Details are not repeatedly described herein.

FIG. 7 is a block diagram of a structure of an electronic device according to an embodiment of this application.

As shown in FIG. 7, the electronic device may be a first device or a second device. The electronic device 600 in this embodiment includes at least one processor 601 (only one processor is shown in FIG. 7), a memory 602, and a computer program 603 that is stored in the memory 602 and that can be run on the at least one processor 601. When executing the computer program 603, the processor 601 implements the steps of the network handover method in the foregoing embodiments.

The electronic device 600 may be a smartphone, a tablet computer, a wearable device, an augmented reality (Augmented Reality, AR)/virtual reality (Virtual Reality, VR) device, a large screen device, a vehicle-mounted terminal, or the like. The electronic device may include but is not limited to the processor 601 and the memory 602.

A person skilled in the art may understand that FIG. 7 is merely an example of the electronic device 600, and does not constitute a limitation on the electronic device 600. The electronic device may include more or fewer components than those shown in the figure, or may combine some components, or may have different components. For example, the electronic device may further include an input/output device, a network access device, or the like.

The processor 601 may be a central processing unit (Central Processing Unit, CPU). The processor 601 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA), or another programmable logic device, a discrete gate, a transistor logic device, a discrete hardware component, or the like. The general-purpose processor may be a microprocessor, or the processor may be any conventional processor or the like.

In some embodiments, the memory 602 may be an internal storage unit of the electronic device 600, for example, a hard disk drive or a memory of the electronic device 600. In some other embodiments, the memory 602 may alternatively be an external storage device of the electronic device 600, for example, a swappable hard disk, a smart media card (Smart Media Card, SMC), a secure digital (Secure Digital, SD) card, a flash card (Flash Card), or the like that is provided on the electronic device 600.

Further, the memory 602 may alternatively include both the internal storage unit and the external storage device of the electronic device 600. The memory 602 is configured to store an operating system, an application, a boot loader (BootLoader), data, another program, and the like, for example, program code of a computer program. The memory 602 may further be configured to temporarily store data that has been output or is to be output.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the mobile terminal is enabled to implement the steps in the foregoing method embodiments when executing the computer program product.

An embodiment of this application provides a chip system. The chip system includes a memory and a processor. The processor executes a computer program stored in the memory, to implement the steps in the foregoing method embodiments.

An embodiment of this application provides a chip system. The chip system includes a processor. The processor is coupled to a computer-readable storage medium. The processor executes a computer program stored in the computer-readable storage medium, to implement the steps in the foregoing method embodiments.

When the integrated unit is implemented in the form of a software function unit and sold or used as an independent product, the integrated unit may be stored in a computer-readable storage medium. Based on such an understanding, all or some of the processes of the method in embodiments of this application may be implemented by a computer program instructing related hardware. The computer program may be stored in a computer-readable storage medium. When the computer program is executed by a processor, steps of the foregoing method embodiments may be implemented. The computer program includes computer program code. The computer program code may be in a source code form, an object code form, an executable file form, some intermediate forms, or the like. The computer-readable medium may include at least any entity or apparatus that can carry the computer program code to a first device or a second device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practices.

In the foregoing embodiments, descriptions of embodiments have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the embodiments provided in this application, it should be understood that the disclosed scenario synchronization method and apparatus, and electronic device may be implemented in other manners. For example, the described apparatus embodiment is merely an example. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be positioned in one position, or may be distributed on a plurality of network units. Some or all of the units may be selected based on actual requirements to achieve the objectives of the solutions in embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A scenario synchronization method, applied to a second device, comprising:
controlling, by the second device, a third device in a second place based on a setting parameter of a second scenario, to implement the second scenario in the second place, wherein the second scenario is a scenario that is generated by the second device or a server based on a setting parameter of a first scenario in a first place and that has a same function as the first scenario, and the setting parameter of the second scenario is generated based on the setting parameter of the first scenario; and
controlling, by the second device, a fourth device in the second place when a second environmental parameter is different from a first environmental parameter, so that the second environmental parameter is the same as or similar to the first environmental parameter, wherein the first environmental parameter is an environmental parameter used when the first scenario is implemented in the first place, and the second environmental parameter is an environmental parameter used when the second scenario is implemented in the second place.

2. The method according to claim 1, wherein the first environmental parameter or the second environmental parameter comprises at least one of the following environmental parameters: a temperature, humidity, light intensity, a light color temperature, air quality, and sound intensity.

3. The method according to claim 1 or 2, wherein the method further comprises:
further controlling, by the second device, at least one third device, so that the second environmental parameter is the same as or similar to the first environmental parameter.

4. The method according to any one of claims 1 to 3, wherein the step of generating, by the second device, the second scenario based on the setting parameter of the first scenario in the first place comprises:
receiving, by the second device, a first scenario configuration template, wherein the first scenario configuration template comprises the setting parameter of the first scenario and the first environmental parameter of the first scenario, and the setting parameter of the first scenario comprises an execution condition of the first scenario, the third device for implementing the first scenario, and a setting parameter of the third device; and
creating, by the second device, the second scenario based on the first scenario configuration template.

5. The method according to claim 4, wherein the setting parameter of the first scenario further comprises a scenario type; and
the creating, by the second device, the second scenario based on the first scenario configuration template comprises:
setting an execution condition of the second scenario based on the execution condition of the first scenario and the scenario type, wherein the scenario type comprises a trigger scenario, a timing scenario, or a manual scenario; and
when the second place comprises the third device for implementing the first scenario, setting a setting parameter of the third device in the second scenario based on the setting parameter of the third device in the first scenario.

6. The method according to claim 5, wherein the setting an execution condition of the second scenario based on the execution condition of the first scenario and the scenario type comprises:
when the scenario type is the trigger scenario, obtaining a dependent device of the execution condition of the first scenario and a trigger parameter; and
when the second place comprises the dependent device of the execution condition of the first scenario, setting the execution condition of the second scenario based on the trigger parameter.

7. The method according to claim 5 or 6, wherein the setting an execution condition of the second scenario based on the execution condition of the first scenario and the scenario type comprises:
when the scenario type is the timing scenario or the manual scenario, setting the execution condition of the first scenario as the execution condition of the second scenario.

8. The method according to any one of claims 5 to 7, wherein the setting a setting parameter of the third device in the second scenario based on the setting parameter of the third device in the first scenario comprises:
when a setting scale of the third device in the first scenario is different from a setting scale of the third device in the second scenario, mapping, based on the setting scale of the third device in the second scenario, the setting parameter of the third device in the first scenario to a corresponding setting parameter in the setting scale of the third device in the second scenario; and
setting the setting parameter of the third device in the second scenario based on the setting parameter obtained through mapping.

9. The method according to any one of claims 1 to 8, wherein the method further comprises:
obtaining a location label and a capability label of the third device, and determining a device comprising the location label and the capability label of the third device as the fourth device.

10. The method according to any one of claims 1 to 8, wherein the method further comprises:
determining, based on a location label and a capability label of the third device, a device that is located in a second region and that is capable of affecting the second environmental parameter as the fourth device, wherein the location label of the third device is used to indicate that the third device is located in a first region in the second place, the first region is connected to or adjacent to the second region, and the capability label of the third device is used to indicate that the third device is capable of affecting the second environmental parameter.

11. The method according to claim 10, wherein the method further comprises:
obtaining at least one second region based on preset location relationships between a plurality of regions in the second place and the first region, wherein the second region is connected to or adjacent to the first region.

12. The method according to claim 10 or 11, wherein the second region further comprises an availability status, and the availability status comprises available and unavailable; and
the determining the second region in the second place comprises:
when an isolation device is disposed between the first region and the at least one second region, obtaining an isolation status of each isolation device; and
determining an availability status of each second region based on the isolation status of each isolation device.

13. The method according to claim 12, wherein the determining an availability status of each second region based on an opening/closing status of each isolation device comprises:
when the isolation device between the second region and the first region does not isolate the first region from the second region, determining that an availability status of a second region that is not isolated is available; or
when the isolation device between the second region and the first region isolates the first region from the second region, determining that an availability status of a second region that is not isolated is unavailable.

14. The method according to any one of claims 1 to 13, wherein the controlling, by the second device, a fourth device in the second place when a second environmental parameter is different from a first environmental parameter, so that the second environmental parameter is the same as or similar to the first environmental parameter comprises:
when the second environmental parameter is different from the first environmental parameter, controlling a running status of the fourth device, so that a difference between the second environmental parameter and the first environmental parameter is less than or equal to a preset threshold.

15. The method according to any one of claims 1 to 13, wherein the controlling, by the second device, a fourth device in the second place when a second environmental parameter is different from a first environmental parameter, so that the second environmental parameter is the same as or similar to the first environmental parameter comprises:
when the second environmental parameter is different from the first environmental parameter, controlling a running status of the fourth device, so that a ratio of the second environmental parameter to the first environmental parameter approaches 1.

16. A scenario synchronization apparatus, used in a second device, comprising:
a control module, configured to control a third device in a second place based on a setting parameter of a second scenario, to implement the second scenario in the second place, wherein the second scenario is a scenario that is generated by the second device or a server based on a setting parameter of a first scenario in a first place and that has a same function as the first scenario, and the setting parameter of the second scenario is generated based on the setting parameter of the first scenario; and
an adjustment module, configured to control a fourth device in the second place when a second environmental parameter is different from a first environmental parameter, so that the second environmental parameter is the same as or similar to the first environmental parameter, wherein the first environmental parameter is an environmental parameter used when the first scenario is implemented in the first place, and the second environmental parameter is an environmental parameter used when the second scenario is implemented in the second place.

17. An electronic device, comprising a memory, a processor, and a computer program that is stored in the memory and that can be run on the processor, wherein when executing the computer program, the processor implements the method according to any one of claims 1 to 15.

18. A computer-readable storage medium, wherein the computer-readable storage medium stores a computer program, and when the computer program is executed by a processor, the method according to any one of claims 1 to 15 is implemented.
